# EUROPEAN PATENT SPECIFICATION

(11) **EP 3 678 355 B1**
(45) Date of publication and mention of the grant of the patent: **19.05.2021**
(21) Application number: 20158309.3
(22) Date of filing: 14.08.2015
(51) Int. Cl.: H04M 1/02, G06F 1/16

(54) **CURVED DISPLAY AND ELECTRONIC DEVICE INCLUDING THE SAME**
GEBOGENE ANZEIGE UND ELEKTRONISCHE VORRICHTUNG DAMIT
DISPOSITIF D'AFFICHAGE INCURVÉ ET DISPOSITIF ÉLECTRONIQUE LE COMPRENANT

(30) Priority: 02.09.2014 KR 20140116501; 27.01.2015 KR 20150012601; 15.05.2015 EP 15167903; 14.07.2015 KR 20150099481
(43) Date of publication of application: 08.07.2020
(62) Divisional of application: 18197780.2
(73) Proprietor: Samsung Electronics Co., Ltd., Gyeonggi-do 16677 (KR)
(72) Inventor: CHOI, Jong Min, Suwon-si, Gyeonggi-do, 16677 (KR); YANG, Soon Woong, Suwon-si, Gyeonggi-do, 16677 (KR); CHOI, Jong Chul, Suwon-si, Gyeonggi-do, 16677 (KR)
(74) Representative: HGF

(56) References cited:
- US-A1- 2013 002 133
- US-A1- 2013 083 496
- US-A1- 2014 104 762

## Description

### CROSS-REFERENCE TO RELATED APPLICATION

This application claims priorities from Korean Patent publication No. KR101516766B field on September 02, 2014 and Korean Patent Application Publication No. KR20160027893 filed on July 14, 2015 in the Korean Intellectual Property Office and European Patent Application publication No. EP2993872 filed on May 15, 2015 in the EPO.

### BACKGROUND

### 1. Field

Aspects of exemplary embodiments relate to an electronic device having a curved display area. 2. Background

A conventional electronic device, such as a smartphone, provides a flat screen related to various user functions.

To extend a display area of such conventional electronic device, the size of a flat display area should be increased, causing an increase in the overall size of the electronic device. Such an increase in size may degrade the portability of an electronic device, particularly, a mobile electronic device, such as a smartphone.

US 2014/104762 A1 describes a flexible display device, wherein one aspect of the device includes a bracket formed in the shape of a plate and forming curved portions in lateral sides, a flexible display panel disposed in an outer side of the bracket and attached to the curved portions and a cover window disposed in an outer side of the flexible display panel. The device further includes a polarizing plate disposed between the flexible display panel and the cover window and thus attached to the curved portions from an outer edge of the flexible display panel. According to some described embodiments, the display device can firmly maintain a cover window, a polarizing plate, and a flexible display panel in a bent state.

US 2013/083496 A1 describes a flexible electronic device which may include a flexible display, a flexible housing and one or more flexible internal components configured to allow the flexible electronic device to be deformed. The flexible display may include flexible display layers, flexible touch-sensitive layers, and flexible display cover layers. The flexible housing may be a multi-stable flexible housing having one or more stable positions. The flexible housing may also include a configurable support structure that, when engaged, provides a rigid support structure for the flexible housing.

US 2013/002133 A1 describes a flexible display panel which includes a flexible substrate including a first region, second regions that extend from the first region and that have a curved surface, and a third region folded towards the second regions. The flexible display panel further includes a first display region in the first region of the flexible substrate, a second display region in the second regions of the flexible substrate, a plurality of non-display regions outside the first display region or the second display regions, wherein at least one of the plurality of non-display regions is in the third region of the flexible substrate, and an encapsulation member for encapsulating the first display region and the second display regions.

### SUMMARY

Aspects of exemplary embodiments are directed to providing a display having a curved display area, to extend a display area while maintaining a certain size, and an electronic device including the same.

Certain exemplary embodiments aim to solve, mitigate or obviate, at least partly, at least one of the problems and/or disadvantages associated with the prior art. Certain embodiments aim to provide at least one of the advantages described below.

The invention is set out in the appended set of claims.

According to an aspect of an example not claimed, there is provided a mobile electronic device comprising: a display comprising a flat surface and a curved surface extending from the flat surface, wherein the display comprises: an external transparent protective layer having an external surface providing said flat surface and said curved surface; an opaque area disposed at an edge of the curved surface under the external protective layer; and a panel module disposed under the external protective layer, the panel module comprising a display area and a non-display area, the display area being disposed under the flat surface and a part of the curved surface, the non-display area being disposed under the other part of the curved surface, and a boundary line between the display area and the non-display area extending in a direction substantially parallel to the flat surface, wherein the opaque area has an inner edge, proximate the flat surface, arranged substantially parallel to said boundary line and such that when viewed from a first direction normal to the curved surface the boundary line is visible and appears to be separated from the inner edge by a first distance, and when viewed from a second direction normal to the flat surface the boundary line is visible and appears to be separated from the inner edge by a second distance.

In certain examples the boundary line, inner edge, and external protective layer are arranged such that said first distance is substantially equal to said second distance.

According to an aspect of an example not claimed, there is provided a mobile (or, in other words, portable) electronic device including a display (which may also be described as a display assembly) comprising a flat surface area and a curved surface area, the curved surface area disposed at a distal end of the display; and a case disposed along a periphery of the display, at least a part of the case protruding over an edge of the curved surface area, wherein the display includes: an external protective layer having a shape conforming to the flat surface area and the curved surface area, an opaque layer disposed under a peripheral edge of the curved surface area of the external protective layer at the distal end of the display, and a panel module having a non-display area disposed under the opaque layer, and the opaque layer covers an entirety of the non-display area with respect to a vertical direction to the flat surface area.

According to an example not claimed, there is provided a mobile electronic device comprising: a display assembly having a flat surface portion and a curved surface portion, the curved surface portion extending from and along an edge of the flat surface portion; and a case (which may also be described as a housing) arranged to support (i.e. either directly, or indirectly, via one or more intermediate member or members) the display assembly (and, for example, extending around a perimeter or periphery of the display assembly), at least part of the case protruding outwardly from (or beyond) an edge of the curved surface portion (e.g. in a direction normal to at least part of the curved surface portion), wherein the display assembly comprises: a protective layer (e.g. transparent protective layer), or member, having a flat portion and a curved portion, the flat surface portion being an external surface of said flat portion and the curved surface portion being an external surface of said curved portion; an opaque part (which may also be described as an opaque portion, member, layer, or coating) arranged under said protective layer and extending along an edge portion of said curved portion; and a display module (which may also be described as a panel module) having a display area (e.g. capable of displaying text and/or graphics) and a non-display area (e.g. not capable of displaying text or graphics), wherein the non-display area is arranged under said opaque part such that when the display assembly is viewed from a direction normal to said flat surface portion, said opaque part at least partially (and, in certain examples, completely) obscures the non-display area from view.

According to an aspect of example not claimed, there is provided a mobile electronic device including a display (which may also be described as a display assembly) comprising a flat surface area and a curved surface area and a case disposed along a periphery of the display, at least a part of the case protruding over an edge of the curved surface area, wherein the display includes an external protective layer having a shape conforming to the flat surface area and the curved surface area and a panel module disposed under the external protective layer, and wherein an end of the curved surface area of the panel module extends beyond an end of the curved surface area of the external protective layer.

According to an aspect of an example not claimed, there is provided a mobile electronic device comprising: a display assembly having a flat surface portion and a curved surface portion; and a case arranged to support the display assembly (e.g. disposed along and/or around a periphery or perimeter of the display assembly), at least a part of the case protruding outwardly from (or beyond) an edge of the curved surface portion (e.g. in a direction normal to at least part of the curved surface portion), wherein the display assembly includes: a protective layer or member (e.g. transparent protective layer) having a flat portion and a curved portion, an external surface of the flat portion providing said flat surface portion and an external surface of the curved portion providing said curved surface portion; and a display module (or panel module) disposed under the protective layer, and wherein an end (or edge) of the panel module extends beyond an end (or edge) of the curved portion of the protective layer.

According to an example not claimed, there is provided a mobile electronic device including a curved display, the curved display including a curved display panel module, the curved display module including a flat surface area parallel to a rear surface of the mobile electronic device and a curved surface area connected to the flat surface area, the curved surface area comprising an electrode trace area disposed at a distal end of a curved surface, an external protective layer disposed on the curved display panel module, and an opaque layer interposed between the electrode trace area and the external protective layer, the opaque layer disposed to obscure view of the electrode trace area with respect to a direction that is perpendicular to the flat surface area.

According to an aspect of an example not claimed, there is provided a mobile (portable) electronic device comprising: a display comprising a flat area and a curved surface area extending from the flat area as one piece therewith (i.e. the flat and curved areas are integral), the curved surface area being bent towards one side of the flat area, the curved surface area having a size smaller than that of the flat area; and a case disposed along an edge of the display, at least a part of the case protruding over a surface of the curved surface area, wherein the display comprises: an external protective layer formed in a shape corresponding to that of the flat area and the curved surface area; an opaque area disposed at a part of an edge of the curved surface area under the external protective layer; and a panel module disposed under the external protective layer, the panel module comprising a display area and a non-display area, the display area being disposed over the flat area and a part of the curved surface area, the non-display area being disposed at the other part of the curved surface area, wherein the opaque layer covers an entirety of the non-display area with respect to a vertical direction to the flat area at the edge of the curved surface area.

According to an aspect of an example not claimed, there is provided a mobile (portable) electronic device comprising: a display assembly having an external surface comprising a flat surface portion and a curved surface portion extending continuously (seamlessly) from the flat surface portion, the curved surface portion being bent in one direction from a plane of the flat surface portion, the curved surface portion having a size smaller than that of the flat surface portion; and a case arranged to support the display assembly (e.g. disposed along an edge of the display assembly), at least a part of the case protruding outwardly from or beyond the curved surface portion, wherein the display assembly comprises: a protective member (e.g. an external protective layer) having a flat portion and a curved portion (these portions being integral portions of the protective member), an external surface of the flat portion providing said flat surface portion and an external surface of the curved portion providing said curved surface portion; an opaque part (e.g. opaque area, layer, member, or coating) disposed proximate an edge of the curved portion and under the protective member; and a display module (e.g. panel module) disposed under the protective member, the display module comprising a display area and a non-display area, the display area being disposed under the flat portion and under a part of the curved portion, and the non-display area being disposed under a remaining portion of the curved portion, wherein the opaque part is arranged such that when the display assembly is viewed from a direction normal to said flat surface portion, said opaque part at least partially (and, in certain embodiments, completely) obscures (i.e. covers) the non-display area from view.

### BRIEF DESCRIPTION OF THE DRAWINGS

FIG. 1A is a diagram illustrating a front side of an electronic device according to an exemplary embodiment.
FIG. 1B is a diagram illustrating a side of an electronic device according to an exemplary embodiment.
FIG. 2A is a magnified view of a side of a curved surface part according to an exemplary embodiment.
FIG. 2B is a magnified view of a side of a curved surface part according to an exemplary embodiment.
FIG. 2C is a diagram illustrating a second curved surface support part according to an exemplary embodiment.
FIG. 3A is a diagram illustrating a front view of a part of an electronic device according to an exemplary embodiment.
FIG. 3B is a diagram illustrating an exploded view of an electronic device according to an exemplary embodiment.
FIG. 4 is a diagram illustrating element arrangement of an electronic device according to an exemplary embodiment.
FIG. 5 illustrates falling states of an electronic device according to an exemplary embodiment.
FIG. 6 illustrates a case on which a display is placed according to an exemplary embodiment.
FIG. 7 illustrates a part of an electronic device in which a reinforcing member is disposed according to an exemplary embodiment.
FIG. 8 illustrates a part of an electronic device in which a shock absorbing member is disposed according to an exemplary embodiment.
FIG. 9 illustrates examples of the shape of a curved surface part according to exemplary embodiments.
FIG. 10 illustrates an electronic device having a symmetric curved surface structure according to an exemplary embodiment.
FIG. 11 illustrates a reinforcing structure of an electronic device having a symmetric curved surface structure according to an exemplary embodiment.
FIG. 12 illustrates a wearable device including a curved surface display area according to an exemplary embodiment.

### DETAILED DESCRIPTION OF EXEMPLARY EMBODIMENTS

Hereinafter, exemplary embodiments of the present disclosure will be described in detail with reference to the accompanying drawings. However, it should be understood that the present disclosure is not limited to the specific exemplary embodiments, but rather includes various modifications and/or alternatives of the exemplary embodiments of the present disclosure. Regarding description of the drawings, like reference numerals may refer to like elements.

The term "have", "may have", "include", "may include" or "comprise" used herein indicates the existence of a corresponding feature (e.g., a number, a function, an operation, or an element) and does not exclude the existence of an additional feature.

The term "A or B", "at least one of A and/or B", or "one or more of A and/or B" may include all possible combinations of items listed together. For example, the term "A or B", "at least one of A and B", or "at least one of A or B" may indicate all the cases of (1) including at least one A, (2) including at least one B, and (3) including at least one A and at least one B.

The term "first", "second" or the like used herein may modify various elements regardless of order and/or priority, but does not limit the elements. Such terms may be used to distinguish one element from another element. For example, "a first user device" and "a second user device" may indicate different user devices regardless of order or priority. For example, without departing the scope of the present disclosure, a first element may be referred to as a second element and vice versa.

It will be understood that when a certain element (e.g., a first element) is referred to as being "operatively or communicatively coupled with/to" or "connected to" another element (e.g., a second element), the certain element may be coupled to the other element directly or via another element (e.g., a third element). However, when a certain element (e.g., a first element) is referred to as being "directly coupled" or "directly connected" to another element (e.g., a second element), there may be no intervening element (e.g., a third element) between the element and the other element.

The term "configured (or set) to" may be interchangeably used with the term, for example, "suitable for", "having the capacity to", "designed to", "adapted to", "made to", or "capable of'. The term "configured (or set) to" may not necessarily have the meaning of "specifically designed to". In some cases, the term "device configured to" may indicate that the device "may perform" together with other devices or components. For example, the term "processor configured (or set) to perform A, B, and C" may represent a dedicated processor (e.g., an embedded processor) for performing a corresponding operation, or a generic-purpose processor (e.g., a CPU or an application processor) for executing at least one item of software or program stored in a memory device to perform a corresponding operation.

The terminology used herein is not for delimiting the present disclosure, but is for describing specific exemplary embodiments. The terms of a singular form may include plural forms unless otherwise specified. The terms used herein, including technical or scientific terms, have the same meanings as would be understood by those skilled in the art. Commonly-used terms defined in a dictionary may be interpreted as having meanings that are the same as or similar to contextual meanings defined in the related art, and should not be interpreted in an idealized or overly formal sense unless otherwise defined explicitly. Depending on cases, even the terms defined herein should not be such interpreted as to exclude the exemplary embodiments of the present disclosure.

An electronic device according to exemplary embodiments of the present disclosure may include at least one of a smartphone, a tablet personal computer (PC), a mobile phone, a video telephone, an electronic book reader, a desktop PC, a laptop PC, a netbook computer, a personal digital assistant (PDA), a portable multimedia player (PMP), an MP3 player, a mobile medical device, a camera or a wearable device (e.g., smartglasses, a head-mounted device (HMD), electronic apparel, an electronic bracelet, an electronic necklace, an electronic appcessory, an electronic tattoo or a smartwatch).

In some exemplary embodiments, the electronic device may be a smart home appliance. The smart home appliance may include at least one of, for example, a TV, a DVD player, an audio, a refrigerator, an air conditioner, a cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™, PlayStation™), an electronic dictionary, an electronic key, a camcorder, or an electronic picture frame.

In another exemplary embodiment, the electronic device may include at least one of various medical devices (e.g., various portable medical measurement devices: a blood glucose measuring device, a heart rate measuring device, a blood pressure measuring device, or a body temperature measuring device), magnetic resonance angiography (MRA), magnetic resonance imaging (MRI), computed tomography (CT), a scanner, or an ultrasonic device), a navigation device, a global positioning system (GPS) receiver, an event data recorder (EDR), a flight data recorder (FDR), a vehicle infotainment device, electronic equipment for vessels (e.g., a navigation system or a gyrocompass), avionics, a security device, a head unit for a vehicle, an industrial or home robot, an automatic teller's machine (ATM), a point of sales (POS) of a store, or an Internet of things device (e.g., a bulb, various sensors, an electric or gas meter, a sprinkler, a fire alarm, a thermostat, a streetlamp, a toaster, exercise equipment, a hot water tank, a heater, or a boiler).

According to exemplary embodiments, the electronic device may include at least one of a part of furniture or a building/structure, an electronic board, an electronic signature receiving device, a projector, or a measuring instrument (e.g., a water meter, an electricity meter, a gas meter, or a wave meter). In the exemplary embodiments, the electronic device may be one or more combinations of the above-mentioned devices. In the exemplary embodiments, the electronic device may be a flexible device. The electronic device according to the present disclosure is not limited to the above-mentioned devices, and may include new electronic devices with the development of technology.

Hereinafter, an electronic device according to exemplary embodiments will be described with reference to the accompanying drawings. The term "user" used herein may refer to a person who uses an electronic device or may refer to a device (e.g., an artificial electronic device) that uses an electronic device.

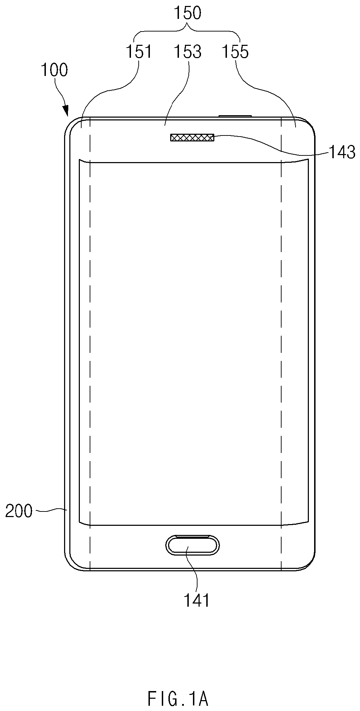

FIG. 1A is a diagram illustrating a front side of an electronic device according to an exemplary embodiment.

An electronic device 100 described below may include a housing (e.g., a case). The housing may include an opening (e.g., an edge area of the electronic device 100) with a first side (e.g., a curved surface part) extending in a first direction (e.g., a right or left edge direction with respect to a front side of the electronic device 100) in at least a part of a surface of the housing. The electronic device 100 may include a substantially transparent external protective layer or member (e.g., glass) including a first edge (e.g., a glass edge) that is disposed within the opening and extends in the first direction while being adjacent to the first side. The glass edge may be a curved surface, also herein described below as a first curved surface. The electronic device 100 may include a panel module layer (which may also be described as a display module) having a second edge (e.g., an edge of a panel module) that is disposed within the opening, bent to conform with the curved first surface, and extending in the first direction while being adjacent to the first side. The panel module layer may be a flexible panel module layer including a non-display area, at which no image is displayed, that extends in the first direction along the second edge and has a first width in a vertical direction to the first direction. Furthermore, the electronic device 100 may include an opaque layer (or other opaque part, member, or coating) disposed within the opening, the opaque layer being interposed between the external protective layer and the panel module layer. The opaque layer may extend in the first direction while being adjacent to the first side, and the opaque layer may include a second width in a vertical direction to the first direction. The second width of the opaque layer may have such a dimension that at least a part of the non-display area in a direction of the first width is covered by the opaque layer. The opaque layer may include, for example, a black matrix.

According to exemplary embodiments, the panel module layer may include a first face facing the external protective layer and a second face facing away from the external protective layer, and the electronic device 100 may further include a sealing layer (e.g., a protective member) at a side of the second face.

The electronic device 100 may further include a touch sensing layer (e.g., a touch sheet or screen) that is bent to conform with the first surface. The touch sensing layer may have a third edge (e.g., an edge of a touch sheet) adjacent to the first edge, and is interposed between the external protective layer and a display layer. In the electronic device 100, the external protective layer further includes a substantially flat second surface extending from the first surface. Furthermore, in the electronic device 100, the opaque layer may be positioned to further cover a part of a display area of the panel module layer adjacent to the non-display area.

Referring to FIG. 1A, the electronic device 100 according to exemplary embodiments may include a display, or display assembly, 150 (e.g., including the external protective layer, the flexible (or partially curved or bent) panel module layer (e.g., including the touch sensing layer (touch sheet), or the touch sensing layer is separately disposed, and the opaque layer) at least one side edge of which has a curved shape (or a curved display area), a speaker 143 disposed at one or more sides of the display, a key button 141, and a case 200 (e.g., the housing).

The display 150 (e.g., at least one of glass (e.g., the external protective layer), a panel module (e.g., the panel module layer or flexible/bent panel module layer), an electromagnetic induction panel, and a heat-dissipating sheet) may include, for example, a first curved surface part or portion 151, a flat surface part or portion 153, and a second curved surface part or portion 155. The first curved surface part 151 and the second curved surface part 155 may have different curvatures. According to an exemplary embodiment, the area of the first curved surface part 151 may be smaller than that of the second curved surface part 155. According to various embodiments, the first curved surface part 151 and the second curved surface part 155 may have the same curvature, and may be symmetrically arranged with respect to a center line of the flat surface part 153. Edges of the first and second curved surface parts 151 and 155 may be supported by one side of the case 200. The opaque layer disposed under glass and the non-display area disposed at an edge of the panel module may be vertically aligned at an edge of at least one of the first and second curved surface parts 151 and 155. Accordingly, a display area of an extended panel module may be disposed at an outermost edge of at least one of the first and second curved surface parts 151 and 155.

The case 200 may be generally shaped like a polygon (e.g., a quadrangle, rectangle), and may cover (or, in other words, surround, engage, hold, or protect) an exterior of the display 150. The case may, for example, be arranged to engage, surround, hold, or otherwise protect a peripheral edge or perimeter of the display assembly. The case may be arranged to provide, in effect, a window (or recess) for receiving the display module, such that when the display module is received in the window it is at least partially protected by the case (e.g. if at least part of the case is arranged to protrude outwardly from an edge of the display module, in a direction generally parallel to the flat surface portion and/or in a direction generally normal to the flat and/or curved surface portions). In other words, the case may stand proud of the external (outer) surface of the display assembly, around or along at least part of the perimeter or peripheral edge of the display assembly. According to an exemplary embodiment, the case 200 may have an edge extending along an exterior of the display 150, at least one side edge of which having a curved surface shape. According to an exemplary embodiment, the case 200 may include a built-in battery type. Alternatively, the case 200 may include a detachable battery type. In the case of the battery detachable type, the case 200 may include a case described below (e.g., a front case (integrated with a rear case), or a front case and a rear case) and a battery cover. According to exemplary embodiments, the case 200 may include an opening (e.g., a left or right edge area) including a first side (e.g., a curved surface part), at least a part of which is flat, and at least a part of a surface of which extends in a first direction (e.g., at least one of a left-side direction and a right-side direction with respect to a center of the case 200).

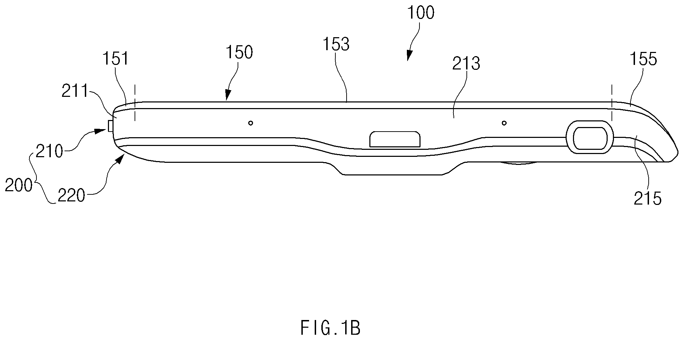

FIG. 1B is a diagram illustrating a side of the electronic device according to exemplary embodiments.

Referring to FIG. 1B, the electronic device 100 may include the display 150, a first case (or first case member) 210 (e.g., a front case), and a second case (or second case member) 220 (e.g., a rear case or a battery cover covering the rear case).

As described above, the display 150 may include the first curved surface part 151, the flat surface part 153, and the second curved surface part 155. The first curved surface part 151 may have a curvature different than that of the second curved surface part 155. The second curved surface part 155 may be contiguous to an end of the flat surface part 153 and may be bent according to a certain curvature. An end of the first curved surface part 151 may contact one side of the first case 210. An end of the second curved surface part 155 may contact another side of the first case 210. The curved and flat surface parts or portions in certain embodiments are respective portions of a single, continuous external surface of the display assembly, such as an external surface of a protective member (e.g. layer) comprising a flat portion and at least one curved portion extending from and along a nominal edge of the flat portion.

The first case 210 may include a first curved surface support part 211, a flat surface support part 213, and a second curved surface support part 215. The first case 210 may be provided as a metal frame in which the first curved surface support part 211, the flat surface support part 213, and the second curved surface support part 215 are formed as one continuous piece. According to exemplary embodiments, the first curved surface support part 211, the flat surface support part 213, and the second curved surface support part 215 may be individually provided to be joined to each other. The first case 210 may be made of, for example, a metallic material (or non-metallic material), such as SUS, an aluminum alloy, or a magnesium alloy.

The first curved surface support part 211 may cover an end of the first curved surface part 151, while supporting a bottom of the first curved surface part 151 having a relatively low curvature. According to exemplary embodiments, an end of the first curved surface support part 211 may protrude over the first curved surface part 151 to prevent damage to the first curved surface part 151 while covering the first curved surface part 151. Furthermore, the first curved surface support part 211 may protrude by a predetermined length over an end of the first curved surface part 151 in an outward direction (a direction in which the first curved part 151 extends from the flat part 153). A protruding area of the first curved surface support part 211 may be, for example, rounded. According to exemplary embodiments, at least a part of the protruding area of the first curved surface support part 211 may be provided with a shock absorbing member (e.g., a resilient and/or non-metallic member, such as rubber or polyurethane, or a metallic member, such as a shock absorbing mesh or bumper) disposed in a longitudinal direction or transverse direction of the case.

The flat surface support part 213 may be disposed under the flat surface part 153 of the display 150 to support the flat surface part 153. A battery lower part insertion hole with a certain size, related to insertion of a battery, may be defined in a certain inner area of the flat surface support part 213. A center of the battery lower part insertion hole may be biased towards, for example, the first curved surface support part 211. According to exemplary embodiments, the battery lower part insertion hole may extend over the flat surface support part 213 and a part of the first curved surface support part 211. The flat surface support part 213 may include at least one sidewall supporting at least a part of a center or an edge of the flat surface support part 153, and a certain part of the inside of the flat surface support part 213 may be dented.

The second curved surface support part 215 may cover an end of the second curved surface part 155, while supporting a bottom of the second curved surface part 155 having a relatively high curvature. Here, the second curved surface support part 215 may have a relatively high curvature compared to the first curved surface support part 211. Furthermore, the second curved surface support part 215 may be tapered in a direction to an end (e.g., a direction in which the second curved surface part 155 extends from the flat surface part 153), to support the high curvature of the second curved surface part 155. According to exemplary embodiments, an end of the second curved surface support part 215 may protrude over a surface of the second curved surface part 155 to prevent damage to the second curved surface part 155. For example, the second curved surface support part 215 may have a cross section shaped like a hook, and may have a rounded edge. According to exemplary embodiments, at least one of inner and outer sides of the end of the second curved surface support part 215 shaped like a hook may be provided with a shock absorbing member (e.g., a resilient and/or non-metallic member, such as rubber or polyurethane, or a metallic member, such as a shock absorbing mesh or bumper) disposed in a longitudinal direction or transverse direction of the case.

The second case 220 may be a rear case supporting the bottom of the first case 210 or a battery cover covering a rear case. The second case 220 may be formed by metal injection molding or non-metal injection molding, such as plastic injection molding. The second case 220 may be provided to support a flat lower part of the first curved surface support part 211, a flat lower part of the flat surface support part 213, and a curved lower part of the second curved surface support part 215. A battery upper part insertion hole may be defined in a part of the inside of the second case 220. The battery upper part insertion hole may be aligned with the battery lower part insertion hole. Accordingly, the battery upper part insertion hole may be biased from a vertical center of the second case 220 in one direction (e.g., towards the first curved surface support part 211). According to exemplary embodiments, in the case of the battery detachable type, the battery upper part insertion hole of the second case 220 may be exposed. A battery cover that covers an entire area including the battery upper part insertion hole may be disposed at one side of the second case 220.

According to exemplary embodiments, in the electronic device 100, the front case may be integrated with the rear case. In this case, the second case 220 may be a battery cover. According to an exemplary embodiment, the electronic device 100 may include the built-in battery type. In this case, the first case 210 may be integrated with the second case 220, and the battery cover may not be provided.

As described above, in the electronic device 100 according to exemplary embodiments, the curvature of the second curved surface part 155 may be greater than the curvature of the first curved surface part 151, so that an extended display area may be provided to a side of the electronic device 100. Furthermore, because the non-display area of the panel module disposed on the second curved surface part 155 is disposed under the opaque layer, a display area may be extended on the basis of an extended panel module. Moreover, because the first curved surface part 151 having a relatively low curvature (or no curvature) is provided, the first curved surface support part 211, which may be relatively thick, is provided, so that the electronic device 100 may be more easily grasped by a user.

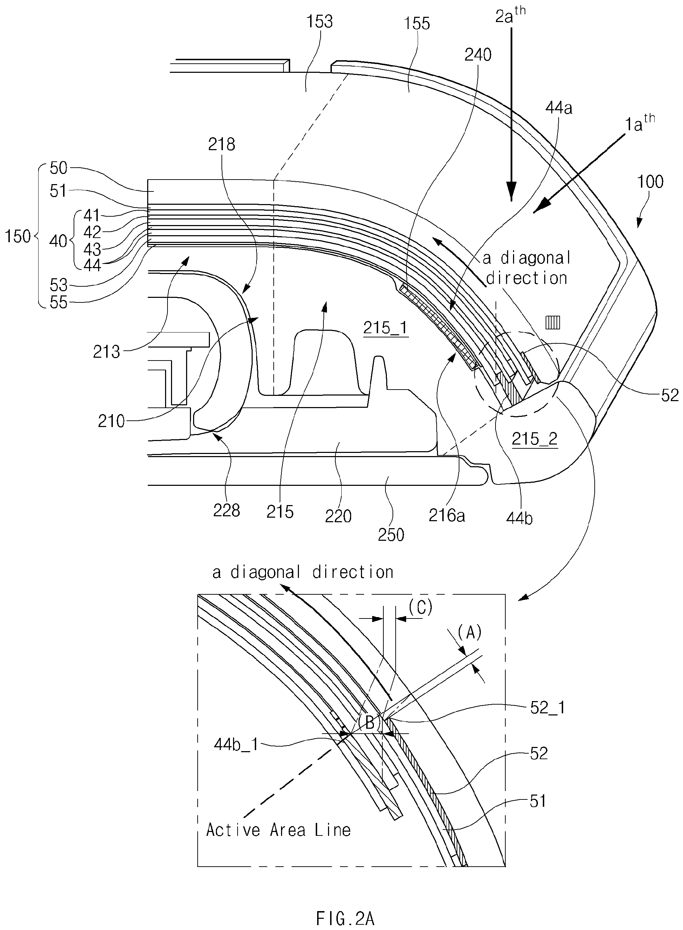

FIG. 2A is a magnified view of an edge area of the (second) curved surface part according to an exemplary embodiment.

Referring to FIG. 2A, a part of the electronic device 100 may include a part of the display 150 (e.g., the flat surface part 153 and the second curved surface part 155 are illustrated), a part of the first case 210 (e.g., the flat surface support part 213 and the second curved surface support part 215 are illustrated), a part of the second case 220, and a part of a battery cover 250. The part of the electronic device 100 will be described below with a focus on an area where the second curved surface part 155 is disposed. The shape of the second curved surface part 155 described below may also be applied to the first curved surface part 151.

The display 150 may include a panel module 40 related to display or control of an image, glass 50 disposed on the panel module 40, an opaque layer 52 (e.g., a black matrix or the like) disposed at one side of a back of an edge of the glass 50, an electromagnetic induction panel 53 (e.g., a digitizer) disposed on or under the panel module 40, and a heat-dissipating sheet 55 (or a heating sheet). Additionally, an adhesive layer 51 may be disposed between the glass 50 and the panel module 40. A non-display area 44b of the panel module 40 may be aligned under the opaque layer 52 of the glass 50, so that the display 150 may be provided with an extended display area 44a.

The panel module 40 may include, for example, a touch sheet 41 (e.g., the touch sensing layer), an adhesive layer 42, a polarizing sheet 43, and a display panel 44. The touch sheet 41 is described as an element of the panel module 40, but exemplary embodiments are not limited thereto. According to exemplary embodiments, the touch sheet 41 may be an element additionally disposed on or under the panel module 40 to support a touch function.

The touch sheet 41 may support, for example, capacitive sensing. The touch sheet 41 may include a touch sensing area, in which signal lines for sensing a touch are arranged in a matrix form, and a trace area for supplying signals to touch sensing signal lines. According to an exemplary embodiment, the trace area may be formed on edges of both sides of the touch sheet 41 or an edge of one side thereof. The trace area may be included in, for example, the non-display area 44b. The adhesive layer 51 may be disposed on the touch sheet 41 so that the touch sheet 41 may be bonded to the glass 50. According to exemplary embodiments, the touch sensing signal line may be formed by a transparent indium tin oxide (ITO) electrode. The trace area may be formed by an opaque metal electrode. The trace area may be disposed on the first curved surface part 151 alone.

The adhesive layer 42 may be disposed between the touch sheet 41 and the polarizing sheet 43 to fix the touch sheet 41 to the polarizing sheet 43. The polarizing sheet 43 may serve to polarize light transmitted through the panel module 40. For example, the polarizing sheet 43 may polarize light irradiated from the display panel outwardly in a regular direction to improve the visibility or viewing angle. The polarizing sheet 43 may be bonded to the touch sheet 41 by the adhesive layer 42. The polarizing sheet 43 may be laminated with the display panel 44. According to exemplary embodiments, an adhesive layer may be additionally disposed between the polarizing sheet 43 and the display panel 44. Alternatively, a polarizing pattern may be formed on a front surface of the display panel 44 to be integrated therewith.

The display panel 44 may have the type of a bendable sheet having a certain thickness. The display panel 44 may include an organic light-emitting diode (OLED) or a liquid crystal display (LCD). The display panel 44 may have a plurality of pixels arranged in a matrix form. The display panel 44 may include, for example, the display area 44a, in which the plurality of pixels are arranged, and the non-display area 44b, in which pads for supplying pixel control signals are arranged. The pads may be coupled to signal lines of a gate driver or a data driver.

The panel module 40 of the display 150 may include the display area 44a and the non-display area 44b (e.g., at least a part of an edge area of the panel module 40), in which pads or signal lines are arranged to supply signals to the display area 44a. The non-display area 44b may be disposed on at least a part of an edge area of the second curved surface part 155 of the display 150. The non-display area 44b of the panel module 40 disposed at an edge of the second curved surface part 155 may be disposed under the opaque layer 52. According to exemplary embodiments, the non-display area 44b disposed at an edge of the panel module 40, which belongs to the first curved surface part 151, may be aligned under the opaque layer 52 disposed at an edge of the glass 50.

The electromagnetic induction panel 53 may be provided when the electronic device 100 supports generation of an input event through electromagnetic induction by an electronic pen. Accordingly, the electromagnetic induction panel 53 may not be provided if operation of an additional electronic pen is unsupported by the electronic device 100. The electromagnetic induction panel 53 may be disposed under the display panel to support a function of receiving an input from an approaching electronic pen.

The heat-dissipating sheet 55 may be disposed under the electromagnetic induction panel 53 and on the first case 210. The heat-dissipating sheet 55 may dissipate heat generated from, for example, the display panel 44. According to an exemplary embodiment, the heat-dissipating sheet 55 may transfer the heat generated from the display panel 44 to the first case to dissipate the heat.

The glass 50 (or other suitable protective layer or member) may be disposed on the panel module 40. The glass 50 may serve to protect the panel module 40 from damage. The glass 50 may be made of, for example, glass, acryl or transparent plastic. As illustrated in FIG. 2A, an edge (or edge portion) of the glass 50 may have a certain curvature. An end of the glass 50 may be placed on, for example, the second curved surface support part 215 of the first case 210.

The opaque layer 52 may be disposed under an edge of the glass 50 to prevent light leakage or improve the visibility. The opaque layer 52 may be printed on the back of the glass, or an additional film may be attached thereto as the opaque layer 52. The film may include a pattern on one surface thereof, thereby giving an aesthetic sense. The opaque layer 52 may be disposed on the entire edge of the glass 50 with a certain width. The opaque layer 52 may cover a part of the non-display area 44b of the panel module 40. Therefore, the width of the opaque layer 52 may be determined according to the size or position of the non-display area 44b.

According to an embodiment, as seen in a normal direction to a curved surface of the glass, an end (or, in other words, an edge of the opaque layer 52 may be extended in width outwards (towards an upper side of the curved surface) from an active area (A/A) line that is a boundary between the non-display area 44b and the display area by a distance of A (e.g., about 1 mm or less, for example, about 0.03 mm to about 0.3 mm or about 0.026 mm to about 0.38 mm). In other words, an edge (which may also be described as an inner edge) of the opaque portion (that edge being the one closest/nearest to the flat portion 153 of the display) may be arranged such that it is substantially parallel to the boundary line between the non-display area and the display area, with both that edge and the boundary line extending (or, equivalently, running) generally along a length of the device. The boundary line extends in a direction substantially parallel to the flat surface area 153 (or, in other words, to the plane of the flat surface), and so does the inner edge. In fig. 2A it will be appreciated that the boundary line and inner edge of the opaque layer/area both run in a direction into the page (i.e. perpendicular to the illustrated cross section). The inner edge of the opaque portion may be further arranged such that, when viewed from a direction normal to the curved surface 155 (in particular, from a direction generally back along a line extending from the inner edge, or boundary line, out through the glass layer, emerging normal to the external curved surface of the glass layer) the separation between that inner edge and the boundary line is a distance A in a direction such that the boundary line is visible. When viewed from this normal direction, it will be appreciated that there is substantially no diffraction taking place; the apparent separation between the inner edge of the opaque layer and the boundary line is substantially equal to the geometric separation in this direction. Thus, by having this separation A, when viewed from this normal direction (relative to the curved surface) the opaque layer obscures a portion of the non-display area from view, but not all of the non-display area. This arrangement provides the advantage that even when viewed from a direction normal to the curved surface, all of the display area is in view; no portion of the display area is obscured by the opaque layer. Similarly, when viewed from a direction normal to the flat portion of the display 153, the opaque layer does not obscure any of the display area. In alternative embodiments where the end (inner edge) of the opaque layer 52 is disposed inside the A/A line (i.e. such that when viewed from the direction normal to the curved surface the boundary line is obscured from view by the opaque layer), a partial area of the display may be covered (obscured) by the opaque layer. In other words, not all of the display area is visible, and some information at its periphery my therefore be lost. Therefore, in certain embodiments, the end (inner edge) of the opaque layer 52 may be disposed outside the A/A line (towards the upper side of the curved surface), wherein the opaque layer 52 may maintain a minimal width in consideration of an assembly tolerance. In other words, positioning the inner edge of the opaque layer such that it is spaced from the boundary line and does not obscure the boundary line when viewed from a direction normal to the curved surface provides advantages as discussed above. Therefore, at least a portion of the lines of the panel module 40 arranged in the non-display area 44b (e.g., the signal supplying lines arranged in the trace area of the touch sheet 41 or the area of the display panel 44 in which the pads or signal supplying lines are arranged) may be covered by the opaque layer 52.

In certain embodiments, the opaque layer 52 may be disposed so as to geometrically cover the entirety of the non-display area 44b with respect to a front direction (or a direction perpendicular to a flat area of the electronic device 100). Here, with respect to the direction perpendicular to the flat area of the electronic device 100, an end of a flat area side of the opaque layer 52 (i.e, an inner edge of the opaque layer) may be geometrically vertically aligned (or vertically in parallel) with an end of a flat area side of the non-display area 44b (i.e. with the boundary line), and such embodiments provide the advantage that all of the non-display area is obscured from view, where such a feature is desirable.

In certain other embodiments, as seen at the front of the electronic device 100 (i.e. when viewed from a direction normal/perpendicular to the flat surface 153), an inner end (or edge) of the opaque layer 52 may be spaced apart (or extended) from the A/A line that is the boundary between the non-display area 44b and the display area by a distance of B (e.g., within about 1 mm, for example, about 0.5 mm to about 0.72 mm).

When the panel is seen through the glass 50 at the front of the electronic device 100 in this direction normal to the flat surface, light emitted from the panel is refracted by the curved portion of the glass 50 so that an object appears to be located at a different position when viewed from the outside of the glass 50. Therefore, as seen by a user at the front of the electronic device 100 (i.e. a user looking in a direction perpendicular to the flat surface), the distance B (e.g., about 1 mm or less, for example, about 0.5 mm to about 0.72 mm), which is the geometric separation distance in a plane parallel to the flat surface between the inner edge of the opaque layer and the boundary line, and is designed to be larger than the distance A (e.g., about 0.02 mm to about 0.4 mm), appears to be a distance C (e.g., about 1 mm or less, for example about 0.264 mm to about 0.5 mm or about 0.2 mm to about 0.3 mm), which is smaller than the distance B. In other words, when viewed from the front of the display (in a direction normal to the flat surface) the apparent separation between the inner edge of the opaque layer and the boundary line is smaller than the geometric separation as a result of diffraction (primarily at the surfaces of the glass layer 50). Therefore, the distance A becomes relatively similar to the distance C so that a certain amount of a non-active area around the display is viewed evenly without giving a sense of difference when viewed at the front of the electronic device 100 or in a normal direction to the curved surface, thereby evoking an aesthetic sense. In other words, in certain embodiments the separations A and B (geometric separations) and the glass/transparent layer 50 may be arranged such that the apparent sizes of the portion(s) of the non-display area visible when viewed from a direction normal to the flat surface 153 and when viewed from a direction normal to the curved surface 155 are substantially equal. It will be appreciated that this appropriate arrangement to achieve this result may also comprise appropriate arrangement of the glass layer curvature and/or the refractive index of the glass layer, or at least take those factors into account in arranging the appropriate values of A and B.

As described above, with respect to the front direction of the electronic device 100 (e.g., a direction perpendicular to a flat area of the electronic device 100), the opaque layer 52 may be disposed so as to optically cover the entirety of the non-display area 44b by virtue of a refractive index of at least one layer (e.g., the external protective layer or the panel module layer) included in the display. For example, when a curved surface area of the electronic device 100 is seen from the front direction (or perpendicular direction) of the electronic device 100, the end of the non-display area 44b and the end of the opaque layer 52 arranged at the curved surface area may appear to be positioned at locations different from their actual locations due to refractive indices of the external protective layer (e.g., the glass 50) and the panel module 40 disposed under the external protective layer. Accordingly, in the electronic device 100 of the present disclosure, the end of the flat area side of the opaque layer 52 positioned at the curved surface area and the end of the flat area side of the non-display area 44b may be arranged so that the end of the flat area side of the opaque layer 52 optically covers the end of the flat area side of the non-display area 44b (e.g., so that the opaque layer 52 covers the non-display area 44b as seen visually through at least one of the external protective layer or the panel module) in the front direction (perpendicular direction to the flat area) of the electronic device 100. In this state, even if the end of the flat area side of the non-display area 44b further protrudes towards the flat area than the end of the flat area side of the opaque layer 52 geometrically, the opaque layer 52 may cover the entirety of the non-display area 44b optically.

As described above, in a curved surface display area (e.g., the first curved surface part 151 or the second curved surface part 155) of the display 150, the non-display area of the panel module 40 is disposed under the opaque layer 52 so that an area (non-display area), which is not displayed when the panel module 40 is observed through glass 50, may be minimized.

As described above, the first case 210 may include the flat surface support part 213 and the second curved surface support part 215 contiguous to the flat surface support part 213. The second curved surface support part 215 may include a support body 215_1 contiguous to the flat surface support part 213 and a curved surface cover part 215 2 disposed at an end of the support body 215_1.

The support body 215_1 may include an upper surface bent with the curvature of the second curved surface part 155 and a lower surface facing the second case 220. Accordingly, the support body 215_1 may be disposed in parallel with the curved surface part of the display 150. A groove (which may also be described as a rail groove, or longitudinal groove extending in a direction generally parallel to an edge of the display assembly) 216a may be disposed in at least one side of the upper surface of the support body 215_1. The rail groove 216a may be formed to a predetermined length in a longitudinal direction of the support body 215_1, with a certain width. According to an embodiment, the rail groove 216a may be formed in at least a part of the entire upper surface of the support body 215_1. A display protective member 240 may be disposed inside the rail groove 216a. The protective member 240 may include a sponge or an adhesive tape. The protective member 240 may serve to block moisture or dust from the inside of the electronic device 100.

The curved surface cover part 215 2 may be disposed at an end of the support body 215_1, forming a certain angle with an extending direction of the support body 215_1. According to an exemplary embodiment, the curved surface cover part 215 2 may be perpendicular to an end of the support body 215_1 and may protrude over the upper surface of the support body 215_1 in an outward direction (e.g., a direction to the glass 50). One sidewall of the curved surface cover part 215 2 may face a side surface of the display 150. A protruding end of the curved surface cover part 215_2 may have a height larger than that of the display 150 placed on the one sidewall. Therefore, the curved surface cover part 215 2 may absorb at least a portion of a shock on the electronic device 100 when the electronic device 100 is dropped.

According to exemplary embodiments, the first case 210 may include a battery upper part insertion hole 218. The battery upper part insertion hole 218 may be disposed at the flat surface support part 213 in the first case 210 or may be disposed over the flat surface support part 213 and the first surface support part 211.

The second case 220 supports the first case 210. A battery lower part insertion hole 228 may be disposed in the second case 220. The battery lower part insertion hole 228 may be aligned with the battery upper part insertion hole 218. According to an exemplary embodiment, an end of one side of the second case 220 may face an inner side of the curved surface cover part 215_2. Therefore, at least a part of the second case 220 may be covered by an edge of the first case 210.

The battery cover 250 may cover a lower surface or an exposed surface of the second case 220. According to an exemplary embodiment, the battery cover 250 may cover the battery lower part insertion hole 228 disposed in the second case 220. An end of one side of the battery cover 250 may be joined to the inner side of the curved surface cover part 215_2. The inner side of the curved surface cover part 215 2 may have a multi-step. Therefore, an end of the second case 220 and an end of the battery cover 250 may be stacked on the inner side of the curved surface cover part 215_2. A surface of the battery cover 250 may be aligned in parallel with one side of the curved surface cover part 215_2. According to exemplary embodiments, the battery cover 250 may be integrated with the second case 220, or may be integrated with the first and second cases 210 and 220. In this instance, the battery cover 250 may be fixed to a rear part of the electronic device 100 having the built-in battery type to cover a battery.

A relation between the opaque layer 52 and the non-display area 44b is described below with reference to FIG. 2A. As illustrated in FIG. 2A, with respect to a 1aₜₕ direction towards the curved surface area of the external protective layer (e.g., a perpendicular direction to a tangent line to a certain point on the curved surface area, or, in other words, a first direction which is normal to a point on the curved surface 155), an end 44b_1 (which may also be described as an inner edge) of the non-display area 44b may further extend in a diagonal direction (e.g., a direction from the curved surface cover part 215 2 to a boundary area between the flat area and the curved surface area, a direction which may also be described as a tangential, transverse, or generally circumferential direction) than an end 52_1 of the opaque layer 52 by a 1aₜₕ width (i.e. by a distance A in a direction normal to the viewing direction). Furthermore, according to various embodiments of the present disclosure, at an edge of the curved surface area, with respect to a 2aₜₕ direction (a perpendicular direction to the flat area or a perpendicular direction to the battery cover 250 placed horizontally), the end 44b_1 of the non-display area 44b may further extend than the end 52_1 of the opaque layer 52 by a 2aₜₕ width (i.e. by a distance B in a direction normal to that viewing direction). Here, the 1aₜₕ width may substantially approximate to the 2aₜₕ width. According to various embodiments of the present disclosure, the specified 1aₜₕ width (e.g., width of A) may be within about 1 mm. Alternatively, the specified 1aₜₕ width may be from about 0.02 mm to about 0.4 mm. For example, the 1aₜₕ width may be adjusted according to a curved surface characteristic applied to an electronic device. According to various embodiments of the present disclosure, the specified 2aₜₕ width (e.g., width of C) may be within about 1 mm. Alternatively, the specified 2aₜₕ width may be from about 0.2 mm to about 0.5 mm. The 2aₜₕ width may also be adjusted according to a curved surface characteristic applied to an electronic device. According to various embodiments of the present disclosure, the specified 1aₜₕ width may be smaller than the 2aₜₕ width. The end 44b_1 of the non-display area may be related to the boundary line (active area line) of the display area.

It will be appreciated that in the embodiment illustrated in fig. 2A, the curved portion of the protection layer 50 and the curved portion of the panel module have substantially the same extent, such that an end (edge) surface of the protective layer 50 and an end (edge) of the non-display area 44b of the panel module each generally rest against (i.e. abut) the same flat surface of the first case portion 215_2. That flat surface is a side-wall of the window (or recess) defined in the case for receiving the display assembly. The flat surface extends by a small distance outwards from the external surface of the curved portion of the protective layer (i.e. in a direction generally normal to the curved surface at that position) and so provides protection to the display assembly. It will be appreciated that sidewalls of the window in the case at the nominal top and bottom ends of the device (only the top end is shown in fig. 2A) in this embodiment also extend outwards beyond the external surfaces of the flat (153) and curved (155) portions of the protective member, to provide protection all around the perimeter of the display assembly.

In the embodiment of fig. 2A, the flat surface part 153 is an external surface of a flat portion of the protection member 50, under which a flat portion of the panel module (display module) is arranged. The curved surface part 155 is an external surface of a curved portion of the protection member 50, under which a curved portion of the panel module (display module) is arranged.

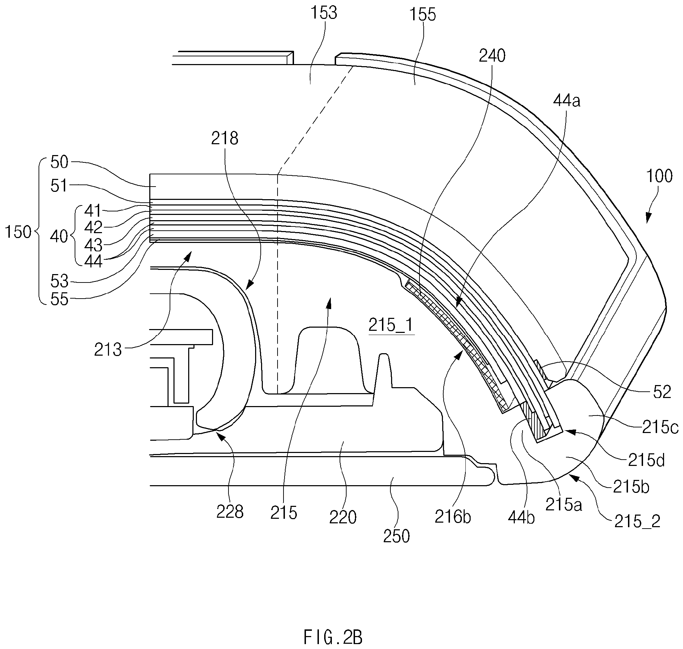

FIG. 2B is a magnified view of a side of the (second) curved surface part according to an exemplary embodiment.

Referring to FIG. 2B, a part of the electronic device 100 may include a part of the display 150 (e.g., the flat surface part 153 and the second curved surface part 155), a part of the first case 210, a part of the second case 220, and a part of a battery cover 250.

The first case 210 may include the support body 215_1 and the curved surface cover part 215_2. The curved surface cover part 215 2 may include, for example, a first sidewall 215a, a second sidewall 215c, a connection part 215b, and a support groove 215d.

The first sidewall 215a may be contiguous to the support body 215_1, and may protrude over the upper surface of the support body 215_1 by a certain distance. Ends of some elements of the display 150, for example, the electromagnetic induction panel 53 and the heat-dissipating sheet 55, may be arranged on a side surface of the first sidewall 215a. The second sidewall 215c may be spaced apart from the first sidewall 215 by a distance of a width of the support groove 215d. The second sidewall 215c may protrude over a surface of the glass 50 of the display 150. An end of the glass 50 may be disposed on a side surface of the second sidewall 215c. According to exemplary embodiments, an end of the opaque layer 52 may be disposed on a side surface of the second sidewall 215c. The connection part 215b connects bottoms of the first and second sidewalls 215a, 215c to form the support groove 215d. Ends of some elements of the display 150, for example, an end of the panel module 40 may be disposed on a surface of the connection part 215b, which is opened by the support groove 215d. Some parts of the display 150, for example, a part of an edge area of the panel module 40 may be inserted into the support groove 215d. For example, the non-display area 44b of the panel module 40 may be inserted into the support groove 215d. According to an exemplary embodiment, the support groove 215d may have depth that is the same as depth of the non-display area 44b, or may have a depth larger than the depth of the non-display area 44b by a predetermined distance. According to exemplary embodiments, the panel module 40, the electromagnetic induction panel 53, and the heat-dissipating sheet 55 may be arranged in the support groove 215d.

The display 150 may include the panel module 40 that protrudes over the glass 50 in a bending direction of the second curved surface part 155. For example, the panel module 40 may disposed that an edge of the second curved surface part 155 protrudes over an end of the glass 50 by a certain distance (e.g., the width of the non-display area 44b). The protruding panel module 40 may be inserted into the support groove 215d.

As described above, because the non-display area 44b of the panel module 40 is inserted into the support groove 215d, an additional opaque layer may not be provided to the display 150. In addition, a rail groove 216b for receiving the display protective member 240 may be disposed in at least a portion of the first sidewall 215a or one side of the support body 215_1 under the panel module 40 or the heat-dissipating sheet.

It will be appreciated that in the embodiment of Fig. 2B, the curved portion of the panel module extends beyond the edge of the curved portion of the protective layer 50, and an end portion (that protrudes beyond the edge of the protection layer) of the curved portion of the panel module is received within a slot (or groove) in the case, that slot running longitudinally, along the edge of the display assembly. The end (edge) of the protection layer is again arranged to abut a substantially flat sidewall of the case, defining part of the window or recess in which the display assembly is received.

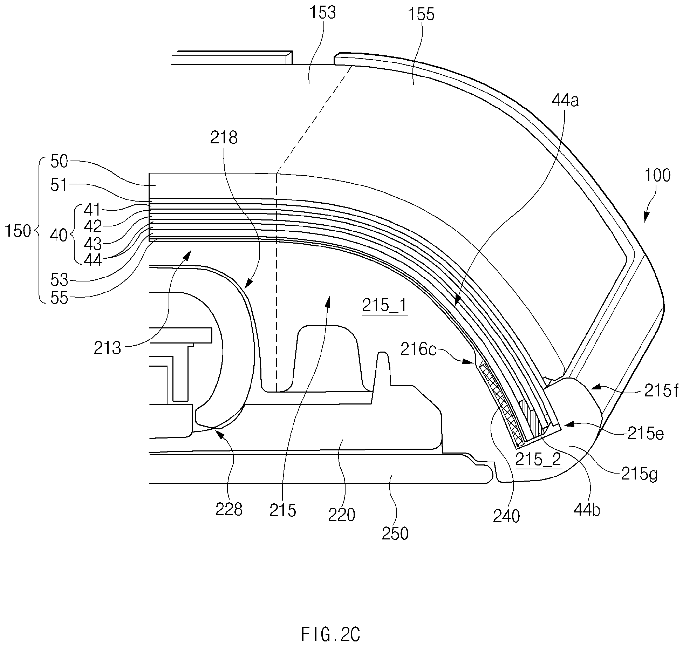

FIG. 2C is a diagram illustrating the (second) curved surface support part according to an exemplary embodiment.

Referring to FIG. 2C, the second curved surface support part 215 may include the support body 215_1 and the curved surface cover part 215_2. The curved surface cover part 215 2 may include, for example, a connection part 215g disposed at one end of the upper surface of the support body 215_1 forming a certain angle (e.g., a right angle or an acute angle) with the upper surface of the support body 215_1 and a sidewall 215f (compared to FIG. 2B, the sidewall 215a is removed). In this case, the elements of the display 150, except for the glass 50, may be arranged in a support groove 215e formed by the connection part 215g and the sidewall 215f. For example, the panel module 40, the electromagnetic induction panel 53, and the heat-dissipating sheet 55 may be arranged in the support groove 215e. The display 150 may be provided with the panel module 40 protruding over an end of the glass 50 by a certain distance (e.g., the width of the non-display area 44b), the electromagnetic induction panel 53 disposed in parallel with the panel module 40, and the heat-dissipating sheet 55.

A rail groove 216c for receiving the display protective member 240 may be disposed in at least one side of the upper surface of the support body 215_1. The rail groove 216c may extend to the inside of the support groove 215e.

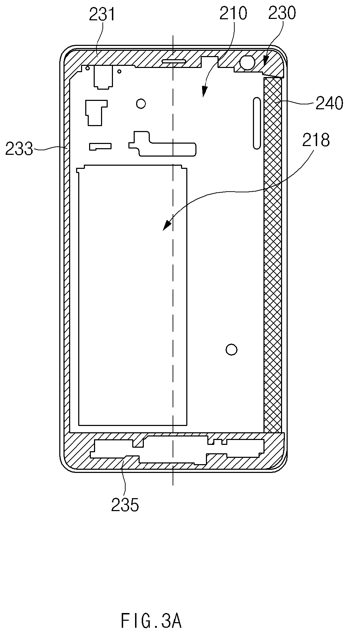

FIG. 3A is a diagram illustrating a front view of a part of an electronic device according to an exemplary embodiment.

Referring to FIG. 3A, the part of the electronic device may include the first case 210, an adhesive member 230, and the protective member 240.

The first case 210 may be, for example, a front case of the electronic device. The first case 210 may be made of, for example, a metallic material. As illustrated in FIG. 3A, the battery upper part insertion hole 218 may be formed inside the first case 210. The battery upper part insertion hole 218 may be biased to one side with respect to a vertical center line of the first case 210, as illustrated in FIG. 3A.

The adhesive member 230 may include a first adhesive area 231 of a certain thickness disposed at an upper edge of the first case 210, a second adhesive area 233 of a certain thickness disposed at an edge of a side part (e.g., a left side part) of the first case 210, and a third adhesive area 235 of a certain thickness disposed at an edge of a lower part of the first case 210. The first to third adhesive areas 231, 233 and 235 may be connected to each other. The first to third adhesive layers 231, 233 and 235 may serve to fix the display 150 to the first case 210. According to an exemplary embodiment, the second adhesive area 233 may be disposed under an area where the first curved surface part 151 of the display 150 is disposed. For example, the second adhesive area 233 may serve to fix the first curved surface part 151 of the display 150 to the first case 210. Apart of an edge of a side part (right side) of the first adhesive area 231 may be disposed at an edge of a side part (right side) of the first case 210. A part of an edge of a side part (right side) of the third adhesive area 235 may be disposed at an edge of a side part (right side) of the first case 210. According to exemplary embodiments, the adhesive member 230 may include the first adhesive area 231 and the third adhesive area 235.

The protective member 240 may be disposed at an edge of a side part (e.g., a right side part) of the first case 210 with a certain width. According to exemplary embodiments, the protective member 240 may be a sponge or an adhesive tape.

Again, it will be appreciated that in the embodiment of Fig. 2C, the curved portion of the panel module extends beyond the edge of the curved portion of the protective layer 50, and an end portion (that protrudes beyond the edge of the protection layer) of the curved portion of the panel module is received within a slot in the case, that slot running longitudinally, along the edge of the display assembly. The end (edge) of the protection layer is again arranged to abut a substantially flat sidewall of the case, defining part of the window in which the display assembly is received.

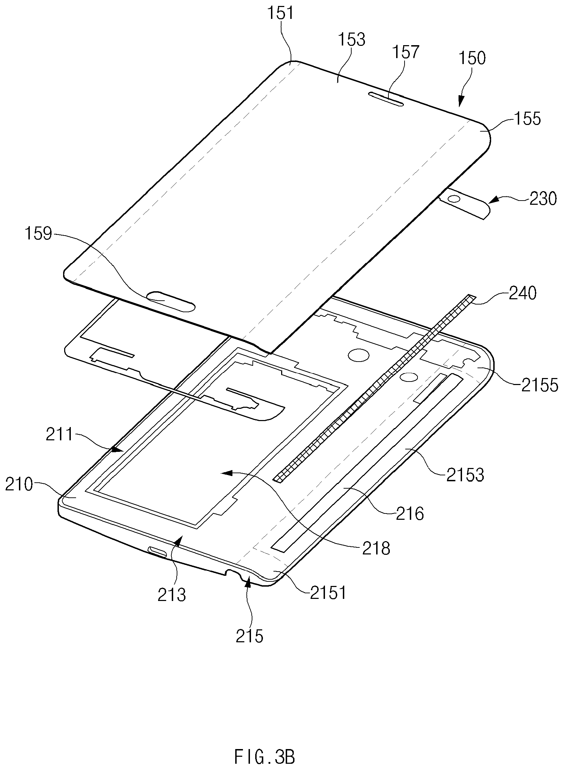

FIG. 3B is a diagram illustrating an exploded view of an electronic device according to an exemplary embodiment.

Referring to FIG. 3B, the electronic device may include the display 150, the first case 210, the adhesive member 230, and the protective member 240.

As illustrated in FIG. 3B, the display 150 may include the first curved surface part 151, the flat surface part 153, and the second curved surface part 155. A speaker hole 157 for exposing a speaker (or a receiver) and a button hole 159 for exposing a home button may be arranged at one side of the display 150.

The first case 210 may include the first curved surface support part 211 of which a surface that faces (e.g., opposes) the first curved surface part 151 has a curvature similar to the curvature of the first curved surface part 151, the second curved surface support part 215 of which a surface that faces (e.g., opposes) the second curved surface part 155 has a curvature similar to the curvature of the second curved surface part 155, and the flat surface support part 213 of which an area that faces (e.g., opposes) the flat surface part 153 defines the battery upper part insertion hole 218. According to exemplary embodiments, an antenna pattern may be disposed on an upper part or a lower part of the first case 210.

The second curved surface support part 215 of the first case 210 may include, for example, a second curved surface support area 2155, on which a part of an upper side of the adhesive member 230 is disposed, a first curved surface support area 2151, on which a part of a lower side of the adhesive member 230 is disposed, and a third curved surface support area 2153, connecting the second curved surface support area 2155 to the first curved surface support area 2151. The rail groove 216 for receiving the protective member 240 may be disposed in the curved surface support area 2153.

The adhesive member 230, which is continuously disposed on an upper part of the display 150 (or the second curved surface support area 2155 and an upper side of the flat surface support part 213), an edge of the first curved surface part 151, and a lower part of the display 150 (or the first curved surface support area 2151 and a lower side of the flat surface support part 213), may be shaped like a "C". According to exemplary embodiments, the adhesive member 230 may be only disposed on an upper part of the display 150 and a lower part of the display 150. As described above, the adhesive member 230 may be disposed on at least a part of a circumference of the first case 210.

The protective member 240 may be disposed on the second curved surface support part 215 (e.g., a location where the second curved surface part 155 of the display 150 is disposed) with a certain length. According to an exemplary embodiment, the protective member 240 may have a length corresponding to a length of the third curved surface support area 2153. The protective member 240 may be placed in the rail groove 216 disposed in the third curved surface support area 2153.

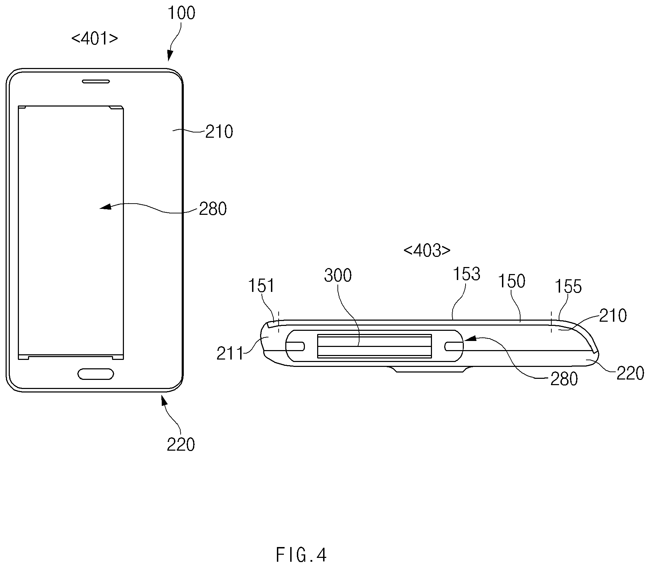

FIG. 4 is a diagram illustrating a back of an electronic device according to an exemplary embodiment.

Referring to FIG. 4, as illustrated in a state 401, the back of the electronic device 100 may include a battery placing part 280 provided by aligning the battery upper part insertion hole and the battery lower part insertion hole disposed in the first and second cases 210 and 220 respectively. The battery placing part 280 may be biased leftwards with respect to a vertical center line of the electronic device 100. For example, as illustrated in a state 403, a battery 300 may be biased to a left side of the electronic device 100. For example, the battery 300 may be biased to the first curved surface part 151 of the display 150 or the first curved surface support part 211 of the first case 210. Accordingly, a location where the battery 300 is placed may alter a center of gravity of the electronic device 100 away from a center line of the electronic device. Therefore, the electronic device 100 may have a tendency to fall in a direction in line with the center of gravity altered by the location of the battery 300.

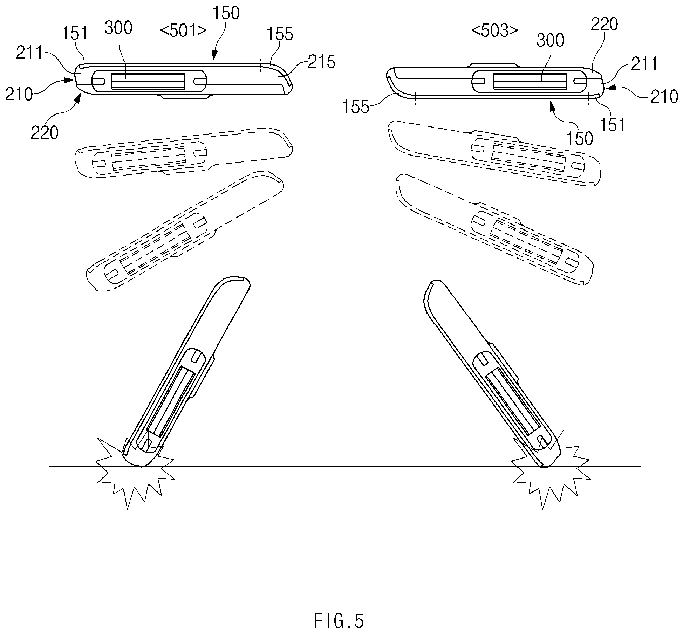

FIG. 5 illustrates falling states of an electronic device according to an exemplary embodiment.

Referring to FIG. 5, as illustrated in a state 501, in the case in which the electronic device 100 is dropped from a height, with the back of the electronic device facing downwards (e.g., with the display 150 facing upwards), a part of the electronic device including the first curved surface part 151 (or a part where the battery 300 is disposed) may rotate downwards. Therefore, a rear part of the first curved surface part 151 in which the battery 300 is disposed (e.g., the first curved surface support part 211 of the first case 210 or an area of the second case 220 coupled to the first curved surface support part 211) may be more likely to impact the ground. Because an area including the first curved surface part 151, for which a case is relatively thick, impacts the ground, a shock is absorbed by the case so that damage to the second curved surface part 155 may be prevented.

According to exemplary embodiments, as illustrated in a state 503, in the case in which the electronic device 100 is dropped from a height with the front side facing downwards (e.g., with the display 150 facing downwards), a part of the electronic device including the first curved surface part 151 (or a part where the battery 300 is disposed) may rotate downwards. Therefore, a front part of the first curved surface part 151 in which the battery 300 is disposed or the first case 210 covering the first curved surface part 151 may be more likely to impact the ground. Because an area including the first curved surface part 151, of which the curvature is relatively low or for which a thickness of a side of a thickness is larger than that for the second curved surface part 155, impacts the ground, a shock is absorbed by the case so that damage to the second curved surface part 155 may be prevented.

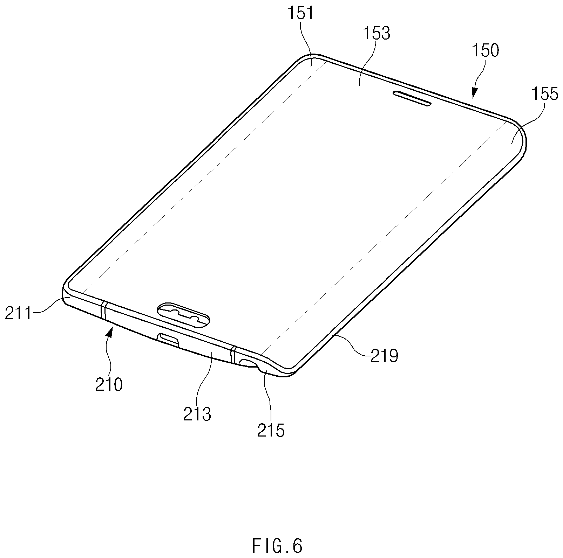

FIG. 6 illustrates a case on which a display is placed according to an exemplary embodiment.

Referring to FIG. 6, the display 150 may include the first curved surface part 151, the flat surface part 153, and the second curved surface part 155. The display 150 may be disposed on a front surface of the first case 210. The first curved surface part 210 may include curved surface support parts having curvatures corresponding to those of the first and second curved surface parts 151 and 155.

According to exemplary embodiments, a guard 219 may be disposed at an edge of an end of the second curved surface support part 215 of the first case 210. The guard 219 may cover an edge of the second curved surface part 155. Furthermore, the guard 219 may protrude over a surface of the second curved surface part 155 by a certain distance. Alternatively, in the case where an adhesive member is interposed between the display 150 and the first case 210, the guard 219 may protrude over a surface of the display 150. Therefore, the guard 219 may prevent the second curved surface part 155 of the electronic device 100 from being damaged when contacting another object, for example when free falling.

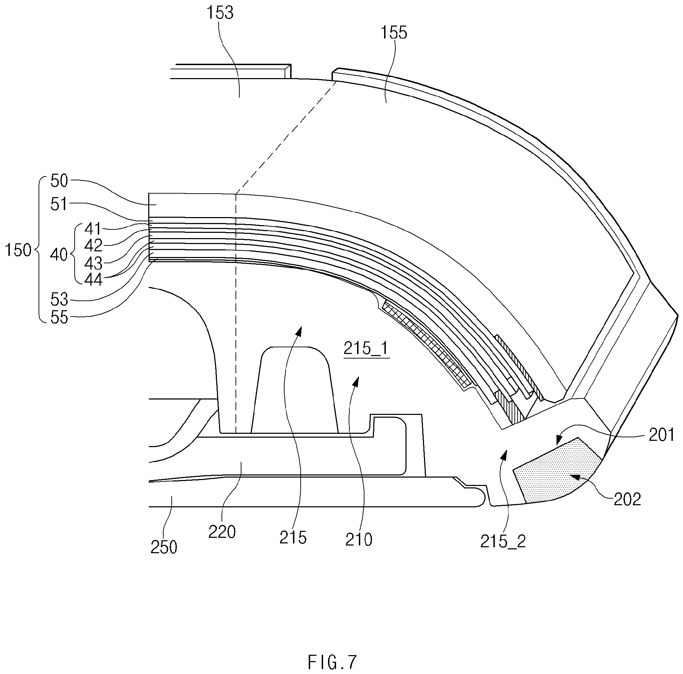

FIG. 7 illustrates a part of an electronic device in which a reinforcing member is disposed according to an exemplary embodiment.

Referring to FIG. 7, the electronic device may include the display 150, the first case 210, the second case 220, and the battery cover 250. A part of the display 150 may include, for example, the flat surface part 153 and the second curved surface part 155. The second curved surface part 155 may be bent to a certain curvature. The second curved surface part 155 may be disposed on the second curved surface support part 215 of the first case 210. According to an exemplary embodiment, an end of the second curved surface part 155 may face a side surface of the curved surface cover part 215_2.

The first case 210 may include the support body 215_1 and the curved surface cover part 215_2. The support body 215_1 may support the second curved part 155 of the display 150. The curved surface cover part 215 2, contiguous to the support body 215_1, may support an end of the display 150.

According to exemplary embodiments, an auxiliary groove 201 having a certain width may be disposed in a longitudinal direction in at least one of surfaces of the curved surface cover part 215_2 exposed to the outside. A reinforcing member 202 may be disposed in the auxiliary groove 201. The auxiliary groove 201 may be opened in a direction in which the second curved surface part 155 of the display 150 extends while being bent.

The reinforcing member 202 may be placed in the auxiliary groove 201 formed in the curved surface cover part 215 2. A thickness of the reinforcing member 202 may be larger than a depth of the auxiliary groove 201. Therefore, the reinforcing member 202 may protrude over an end of an opening of the auxiliary groove 201. According to exemplary embodiments, at least a part of an outer surface of the reinforcing member 202 may be rounded. The reinforcing member 202 may include a material capable of absorbing a shock due to contact with an object. For example, the reinforcing member 202 may be formed of at least one of a non-metallic material or a metallic material. The reinforcing member 202 may have a mesh structure for increasing a shock absorbing rate.

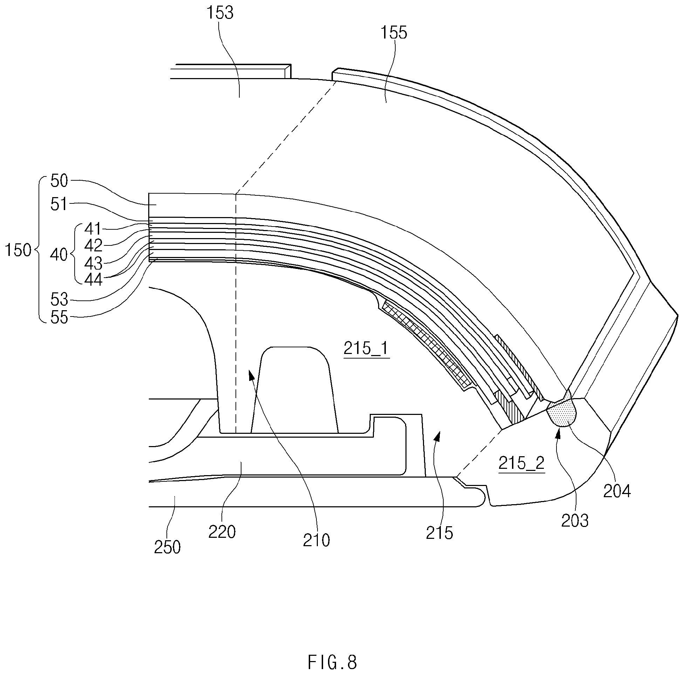

FIG. 8 illustrates a part of an electronic device in which a shock absorbing member is disposed according to an exemplary embodiment.

Referring to FIG. 8, the electronic device may include the display 150, the first case 210, the second case 220, and the battery cover 250. The display 150 may include the flat surface part 153 and the second curved surface part 155. The first case 210 may include the second curved surface support part 215 corresponding to the second curved surface part 155. The second curved surface support part 215 may include the support body 215_1 and the curved surface cover part 215_2.

According to exemplary embodiments, a rail groove 203 may be disposed in a longitudinal direction in a side surface of the curved surface cover part 215 2 (e.g., a surface facing an end of the display 150). A shock absorbing member 204 may be disposed in the rail groove 203. The shock absorbing member 204 may include various materials and structures for dispersing or absorbing an external or internal shock. For example, the shock absorbing member 204 may be formed as a solid (the inside of which is filled) using rubber, flexible plastic, or mixtures thereof. Furthermore, the shock absorbing member 204 may be formed of a non-metallic material or a metallic material, and may have a mesh structure.

According to exemplary embodiments, a width of the rail groove 203 may have an opening width (e.g., a thickness of the display 150 except for the glass 50) similar to a width of a side surface of the curved surface cover part 215_2. In this case, the shock absorbing member 204 disposed in the rail groove 203 may prevent the panel module 40, the electromagnetic induction panel 53 and the heat-dissipating sheet 55 of the display 150 from being damaged.

According to exemplary embodiments, the electronic device may employ both the reinforcing member structure of FIG. 7 and the shock absorbing member structure of FIG. 8.

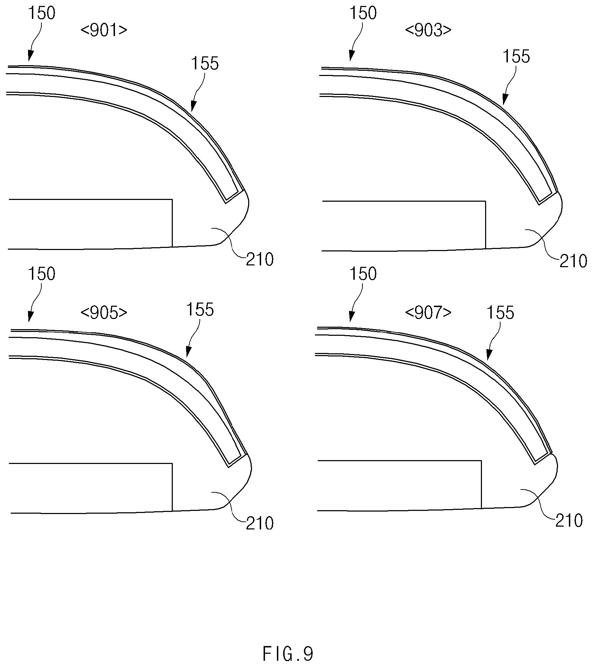

FIG. 9 illustrates examples of the shape of a curved surface part according to exemplary embodiments.

Referring to FIG. 9, as illustrated in a state 901, the second curved surface part 155 of the display 150 may bent to have a protruding amount that is the same as the protruding amount (e.g., about 0.05 mm to about 0.3 mm) of a flat surface part of the display 150 (on the basis of a horizontal line of the flat surface part). Alternatively, as illustrated in a state 903, the second curved surface part 155 of the display 150 may have a protruding amount (e.g., about 0.3 mm to about 0.5 mm) that is larger than the protruding amount of the flat surface part. Alternatively, as illustrated in a state 905, the curved part may further protrude compared to the flat surface part. Alternatively, as illustrated in a state 907, the second curved surface part 155 of the display 150 may gradually decrease in a side part protruding amount compared to the flat surface part.

According to an exemplary embodiment, the curvature of the second curved surface part 155 may be adjusted so that at least a part of an end of the second curved surface part 155 has a straight line section or a straight-line-like curve section (e.g., a part of a curve having a radius larger than a predetermined value) to stably press the second curved surface part 155 of the display 150 against the curved surface support part of the first case 210 for the purpose of easy assembling of the display 150. The curved surface support part of the first case 210 (e.g., an end of the curved surface support part) may have a flat surface to correspond to the straight line section of the second curved surface part 155 (e.g., a part of an end of the second curved surface part 155). For example, at an interface area between the support body and the curved surface cover part, at least a part of the support part may have a flat surface.

According to exemplary embodiments, the curved surface support part of the first case 210 may have a protruding amount or a curvature corresponding to the curvature or the protruding amount of the second curved surface part 155 mentioned above with respect to the states 901 to 907. Alternatively, the curved surface support part of the first case 210 may have the same curvature regardless of the curvature or the protruding amount of the second curved surface part 155.

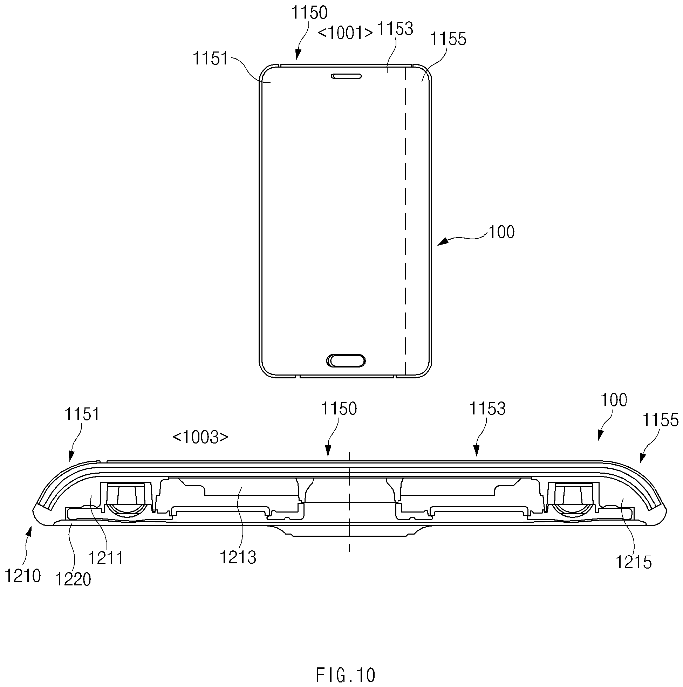

FIG. 10 illustrates an electronic device having a symmetric curved surface structure according to an exemplary embodiment.

Referring to FIG. 10, as illustrated in a state 1001, a display 1150 of the electronic device 100 may include a first curved surface part 1151, a flat surface part 1153, and a second curved surface part 1155. The first and second curved surface parts 1151 and 1155 may have the same curvature. For example, the first curved surface part 1151 may be symmetric with the second curved surface part 1155 with respect to a vertical center line of the flat surface part 1153. Furthermore, as illustrated in a state 1003, the electronic device 100 may include the display 1150 of which both curved surface parts are symmetric with each other, a first case 1210, and a second case 1220. The first case 1210 may include a first curved surface support part 1211 supporting the first curved surface part 1151, a flat surface support part 1213 supporting the flat surface part, and a second curved surface support part 1215 supporting the second curved surface part 1155. An upper surface of the first curved surface support part 1211 may have a curvature similar to that of the first curved surface part 1151. An upper surface of the second curved surface support part 1215 may have a curvature similar to that of the second curved surface part 1155. Therefore, the first case 1210 may have an upper surface of which both side edges are symmetric with each other with respect to a vertical center line of the electronic device 100. The second case 1220 may be disposed under the first case 1210 to support the first case 1210.

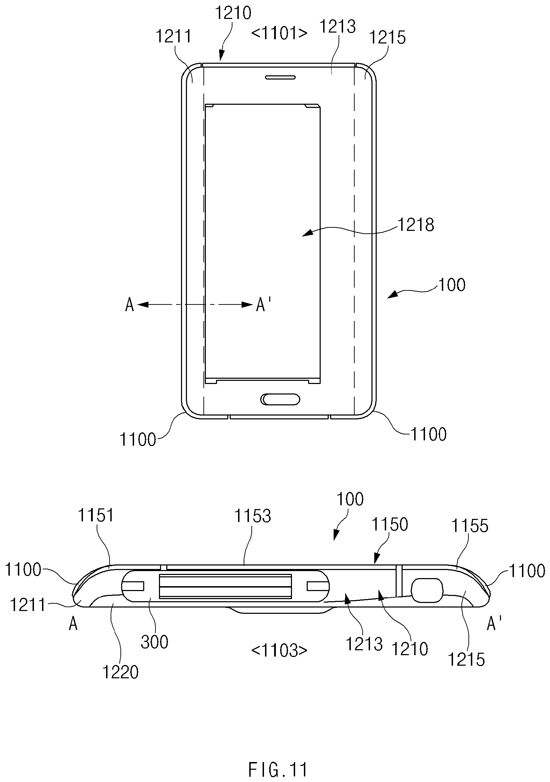

FIG. 11 illustrates a reinforcing structure of an electronic device having a symmetric curved surface structure according to an exemplary embodiment.

Referring to FIG. 11, as illustrated in a state 1101, the first case 1210 of the electronic device 100 may include the first curved surface support part 1211, the flat surface support part 1213, and the second curved surface support part 1215. The first and second curved surface support parts 1211 and 1215 may be symmetric with each other with respect to a vertical center line of the electronic device 100. An upper surface of the first curved surface support part 1211 and an upper surface of the second curved surface support part 1215 may have the same or similar curvature.

A battery upper part insertion hole 1218 may be disposed inside the flat surface support part 1213. A vertical length of the battery upper part insertion hole 1218 may be larger than a horizontal length thereof. According to exemplary embodiments, the battery upper part insertion hole 1218 may be biased to one side with respect to a center line of the electronic device 100. According to an exemplary embodiment, an area of the battery upper part insertion hole 1218 biased to the first curved surface support part 1211 may be larger than an area of the battery upper part insertion hole 1218 biased to the second curved surface support part 1215.

According to exemplary embodiments, a damage prevention member 1100 may be disposed at an edge of the first case 1210. The damage prevention member 1100 may protrude by a certain distance along an edge of the first curved surface support part 1211 and an edge of the second curved surface support part 1215. A height of the damage prevention member 1100 may be larger than that of a surface of the display 1150 by a certain distance after the display 1150 is placed. For example, as illustrated in a state 1103, the damage prevention member 1100 may protrude over the first curved surface part 1151 or the second curved surface part 1155 of the display 1150.

Referring to the state 1103, the electronic device 100 may include the first and second curved surface parts 1151 and 1155 symmetric with each other with respect to a center line of the electronic device, and the flat surface part 1153 disposed between the first and second curved surface parts 1151 and 1155. The first and second curved surface parts 1151 and 1155 may have the same or similar curvature.

The first curved surface support part 1211 may be disposed under the first curved surface part 1151 to support the first curved surface part 1151. The second curved surface support part 1215 may be disposed under the second curved surface part 1155 to support the second curved surface part 1155. The flat surface support part 1213 may support a center part of the display 1150, for example, the flat surface part. At least a part of the battery 300 may be disposed in the battery upper part insertion hole 1218 illustrated in the state 1101. When the second case 1220 is joined to the first case 1210, the battery upper part insertion hole 1218 may be aligned with the battery lower part insertion hole of the second case 1220 to form a battery placing part. The battery 300 may be placed in the battery placing part. The battery placing part may be biased to the first curved surface part 1151 or the first curved surface support part 1211. Therefore, the battery 300 may be biased towards the first curved surface support part 1211.

Although it has been described that the damage prevention member 1100 is disposed on the first and second curved support parts 1211 and 1215, the damage prevention member 1100 may be disposed on the first curved support part 1211 alone. Alternatively, the damage prevention member 1100 disposed on the first curved surface support part 1211 may differ in structure or material from the damage prevention member 1100 disposed on the second curved surface support part 1215 to prevent damage to the first curved surface part 1151 due to the biased positioning of the battery 300. For example, the damage prevention member 1100 disposed on the first curved surface support part 1211 may employ a material or structure of which a shock absorbing amount is larger than that of the damage prevention member 1100 disposed on the second curved surface support part 1215.

According to various embodiments of the present disclosure, a mobile electronic device according to an embodiment of the present disclosure may include a display including a flat area and a curved surface area extending from the flat area as one piece therewith, the curved surface area being curved towards one side of the flat area, the curved surface area having a size smaller than that of the flat area, wherein the display may include an external protective layer formed in a shape corresponding to that of the flat area and that of the curved surface area, an opaque area disposed at a part of an edge of the curved surface area under the external protective layer, and a panel module disposed under the external protective layer, the panel module having a display area and a non-display area, the display area being disposed over the flat area and a part of the curved surface area, the non-display area being disposed at the other part of the curved surface area, wherein, with respect to a 1aₜₕ direction (or a first direction) at the curved surface area of the external protective layer, an end of the non-display area extends further (or protrudes) in a diagonal direction than an end of the opaque layer by a 1aₜₕ width (or a first width), wherein, with respect to a 2aₜₕ direction (or a second direction) at the edge of the curved surface area, the end of the non-display area extends further (or protrudes) in the diagonal direction than the end of the opaque layer by a 2aₜₕ width (or a second width).

The first direction may be perpendicular to a tangent line to an arbitrary point on the curved surface area. The second direction may be perpendicular to the flat area.

According to various embodiments of the present disclosure, the first width may substantially approximate to the second width, wherein the first width specified may be within about 1 mm or may be from about 0.02 mm to about 0.4 mm. The second width specified may be within about 1 mm or may be from about 0.2 mm to about 0.5 mm.

According to various embodiments of the present disclosure, at least a part of the end of the curved surface area of the external protective layer and at least a part of an end of the panel module may be arranged in parallel with each other in the display.

According to various embodiments of the present disclosure, according to an embodiment of the present disclosure, a mobile electronic device may include a display including a flat area and a curved surface area extending from the flat area as one piece therewith, the curved surface area being curved towards one side of the flat area, the curved surface area having a size smaller than that of the flat area, wherein the display may include an external protective layer formed in a shape corresponding to that of the flat area and that of the curved surface area, an opaque area disposed at a part of an edge of the curved surface area under the external protective layer, and a panel module disposed under the external protective layer, the panel module having a display area and a non-display area, the display area being disposed over the flat area and a part of the curved surface area, the non-display area being disposed at the other part of the curved surface area, wherein, at the edge of the curved surface area, the opaque layer may substantially cover a greater part (a majority, or major part) of the non-display area.

According to various embodiments of the present disclosure, with respect to a first direction at the curved surface area of the external protective layer, an end of the non-display area may further extend in a diagonal direction over a boundary line between the non-display area and the display area by a first width so that the opaque layer may substantially cover the greater part of the non-display area.

According to various embodiments of the present disclosure, with respect to a second direction at the edge of the curved surface area, the end of the non-display area may further extend in the diagonal direction than an end of the opaque layer by a second width so that the opaque layer may substantially cover the greater part of the non-display area.

According to various embodiments of the present disclosure, with respect to a perpendicular direction to the flat area, the opaque layer may substantially cover the entirety of the non-display area geometrically.

According to various embodiments of the present disclosure, with respect to the perpendicular direction to the flat area, the opaque layer may substantially cover the entirety of the non-display area optically by virtue of a refractive index of at least one layer included in the display.

According to various embodiments of the present disclosure, the curved surface area may be disposed at edges of both sides of the display, or may be convex with respect to the flat area.

According to various embodiments of the present disclosure, the mobile electronic device may further include at least one of a case disposed along an edge of the display, at least a part of the case protruding over a surface of the curved surface area, and an adhesive member disposed under the flat area of the display, the adhesive member being selectively disposed under at least a part of the curved surface area of the display.

According to various embodiments of the present disclosure, the case may further include at least one of: a support groove to which the non-display area is insertable and a sidewall constituting a part of the support groove and facing a side surface of an edge of the external protective layer, a battery placing part biased in a direction away from the curved surface area with respect to a vertical center line of the mobile electronic device, a rail groove formed in a longitudinal direction in a surface of the case facing a back of an edge side of the display and a protective member inserted into the rail groove, an auxiliary groove formed in at least a part of a surface of the case exposed to the outside and a reinforcing member disposed in the auxiliary groove to absorb or disperse a shock, and a shock absorbing member disposed on one surface of a curved surface cover part facing an end of the edge of the display.

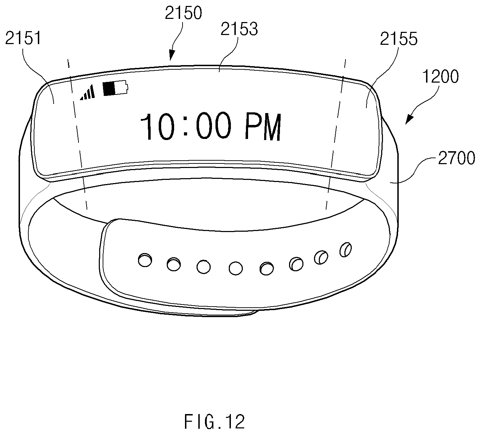

FIG. 12 illustrates a wearable device including a curved surface display area according to an exemplary embodiment.

Referring to FIG. 12, an electronic device 1200 may be a wearable device. According to an exemplary embodiment, the electronic device 1200 may include a display 2150 that may be divided into a first curved surface part 2151, a flat surface part 2153, and a second curved surface part 2155. The first curved surface part 2151, the flat surface part 2153, and the second curved surface part 2155 may be continuously arranged. The first and second curved surface parts 2151 and 2155 may be curved surface display areas having different curvatures. The second curved surface part 2155 may have a greater curvature than a curvature of the first curved surface part 2151.

According to exemplary embodiments, the electronic device 1200 may include a joining part 2700 to which a device including the display 2150 may be detachably attached. The joining part 2700 may be wearable on at least a part of a body of a user. The joining part 2700 may include a placing part to which the display 2150 may be detachably attached. The joining part 2700 may further include a connection part coupled to the joining part 2700 at a side part of the display 2150 (e.g., a left side part of the first curved surface part 2151 and a right side part of the second curved surface part 2155). The above-mentioned guard may be disposed at an edge of the display 2150.

As described above, an electronic device according to exemplary embodiments may provide a display including a curved surface display area or a curved surface part on at least one of edge areas thereof, and an extended display area of the display by aligning and disposing a non-display area of the display (e.g., a non-display area of a panel module) under an opaque layer. In exemplary embodiments, an area of the display excepting glass (e.g., the non-display area of the panel module) may be inserted into a groove formed in one side of a case, and the display without the opaque layer may be provided. The groove may support strong bonding between the curved surface display area and the case.

A member such as a sponge may be disposed between the curved surface display area and the case to block moisture or dust and relieve a shock.

Furthermore, an area where a battery is disposed is biased to one side from a center line of the case so that the curved surface display area having a relatively low curvature or a non-curved surface display area (or an adjacent case) lands on the ground when the electronic device is dropped, thereby preventing damage to the electronic device. Here, a damage prevention member may be disposed on the non-curved surface display area or a display area having a relatively low curvature.

Regarding damage prevention, a case covering the curved surface display area may include a guard protruding over a surface of the display from an edge of the curved surface display area. Furthermore, a shock absorbing member may be disposed on at least one side of the case of the curved surface display area (e.g., at least one groove).

According to exemplary embodiments, an end of the curved surface display area may be deprived of curvature (straightened) to support easy joining to a case.

As described above, according to exemplary embodiments, the display may include glass having an edge at least a part of which has a certain curvature, an opaque layer disposed at the edge of the glass, and a panel module including a non-display area aligned under the opaque layer.

According to exemplary embodiments, the panel module may include a flat surface part and a curved surface part contiguous to the flat surface part, wherein the non-display area may be disposed at an edge of the curved surface part.

According to exemplary embodiments, an end of one side of the opaque layer and an end of the non-display area may be vertically aligned with each other.

According to exemplary embodiments, an end of one side of the opaque layer may vertically protrude over an end of the non-display area.

According to exemplary embodiments, the display may further include an adhesive layer disposed between the glass and the panel module.

According to exemplary embodiments, the display may further include at least one of an electromagnetic induction panel disposed under the panel module with a certain curvature and a heat-dissipating sheet disposed under the electromagnetic induction panel with a certain curvature.

According to exemplary embodiments, the glass and the panel module may include a first curved surface part having a first curvature, a flat surface part contiguous to the first curved surface part, and a second curved surface part contiguous to the flat surface part, the second curved surface part having a second curvature different from the first curvature.

According to exemplary embodiments, the glass and the panel module may include a first curved surface part having a first curvature, a flat surface part contiguous to the first curved surface part, and a second curved surface part contiguous to the flat surface part, the second curved surface part having the first curvature.

As described above, according to exemplary embodiments, an electronic device may include a display of glass having an edge at least a part of which has a certain curvature, an opaque layer disposed at the edge of the glass, and a panel module including a non-display area aligned under the opaque layer, and a case supporting the display.

According to exemplary embodiments, the case may include a groove into which the non-display area is inserted.

According to exemplary embodiments, the case may further include a rail groove formed in a longitudinal direction in a surface of the case facing the display and a protective member inserted into the rail groove.

According to exemplary embodiments, the case may further include a guard covering an edge of the display placed on the case, the guard protruding over a surface of the display by a certain distance.

According to exemplary embodiments, the case may further include an auxiliary groove formed in at least a part of a surface of the case exposed to the outside, and a reinforcing member disposed in the auxiliary groove to absorb or disperse a shock.

According to exemplary embodiments, the case may further include a curved surface support part facing an end of the display, a rail groove disposed in a side surface of the curved surface support part while facing the display, and a shock absorbing member disposed in the rail groove.

According to exemplary embodiments, the case may further include a battery placing part biased to a non-curved surface display area or an edge curved surface part having a lower curvature than that of the curved surface display area, with respect to a center line.

According to exemplary embodiments, an end of the curved surface display area of the display may be straightened by as much as a certain width.

According to exemplary embodiments, a case upper surface facing an end of the curved surface display area of the display may have a flat surface with a certain width.

According to exemplary embodiments, the electronic device may further include an adhesive member disposed on at least a part of an edge between the display and the case.

According to exemplary embodiments, the electronic device may be a wearable device.

As described above, according to exemplary embodiments, an electronic device including a curved surface display area may include a display of glass having an edge at least a part of which has a certain curvature and a panel module protruding over an end of the glass, the panel module including a non-display area, and a case including a groove into which the non-display area is inserted.

According to exemplary embodiments, the electronic device may further include an opaque layer formed to a certain width at an end of the glass.

According to exemplary embodiments of the present disclosure, a display area may be substantially extended, while maintaining the size of an electronic device by adopting a curved surface display area and treating an edge area.

The exemplary embodiments of the present disclosure are illustrative and not limiting. Other additions, subtractions, or modifications falling within the scope of the appended claims will be understood by the skilled artisan in view of the present disclosure.

## Claims

1. An electronic device (100) comprising:
a display (150) comprising a display flat portion (153) and a display curved portion (155), the display (150) comprising:
an external protective layer (50), and
a panel module layer (40) disposed under the external protective layer (50);
a frame (210) on which the display (150) is disposed, the frame comprising:
a first frame portion (215) comprising:
a first surface (215_1) which is curved and has a portion having a first curvature corresponding to a second curvature of a portion of the display curved portion (155),
a groove (215e) formed along an edge of the first surface (215_1), wherein the groove (215e) has a first portion formed within the portion of the first surface having the first curvature and a second portion facing a side of the display curved portion (155), wherein the groove (215e) is formed as an indent of the frame (210) in an edge area of the first surface (215_1) of the frame (210), and
a second surface (215_2) which abuts the groove (215e) and faces the side of the display curved portion (155); and
a second frame portion (213) extended from the first frame portion (215) and supporting the display flat portion (153); and
an adhesive (240)
which is disposed at least in the portion of the groove (215e) formed within the first surface (215_1), the adhesive being disposed between the frame (210) and the display (150) and attaching the display curved portion (155) to the frame (210).

2. The electronic device (100) according to claim 1, wherein the frame (210) further includes a third frame portion (211) which is extended from the second portion (213) and includes:
a third surface which is curved and has a portion corresponding to a portion of another display curved portion (151), and
another groove formed along the third surface,
wherein the adhesive is disposed in the other groove between the frame and the display and attaches the other display curved portion (151) and the third surface of the frame (210).

3. The electronic device (100) according to claim 2, wherein the other groove is formed in a longitudinal direction with respect to the third surface of the frame (210).

4. The electronic device (100) according to claim 1, wherein the frame (210) further comprises a guard (219) which is disposed higher than a surface of the display (150) and covers an edge of the display (150).

5. The electronic device (100) according to claim 1, wherein the frame (210) further comprises:
an auxiliary groove (201) formed in at least a part of an external surface of the frame (210); and
a reinforcing member (202) disposed in the auxiliary groove (201), the reinforcing member (202) being configured to absorb or disperse a shock.

6. The electronic device (100) according to claim 1, wherein the frame (210) further comprises:
a curved surface support part (211) facing an end of the display (150); and
a shock absorbing member (204) disposed in a side surface of the curved surface support part (211).

7. The electronic device (100) according to claim 1, wherein the frame (210) further comprises a battery placing part (280) which is biased, with respect to a center line of the electronic device (100).

8. The electronic device (100) according to claim 7, wherein the groove (215e) is disposed in an adjacent area of a guard (219).

9. The electronic device (100) according to claim 2, wherein a width of the first surface (215_1) is the same as or similar to a width of the third surface, and
wherein the first surface (215_1) and the third surface are symmetric with respect to a surface corresponding to the second frame portion (213) of the frame (210).

10. The electronic device (100) according to claim 1, wherein the panel module layer (40) is disposed between the adhesive and the frame (210), or
wherein the adhesive is disposed between the panel module layer (40) and the frame (210).

11. The electronic device (100) according to claim 1, wherein the first surface (215_1) of the first frame portion (215) is curved around the groove (215e) and faces an end edge of the panel module layer (40) and a top surface of the panel module layer (40).

## Patentansprüche

1. Elektronische Vorrichtung (100), umfassend:
eine Anzeige (150), umfassend einen flachen Anzeigeabschnitt (153) und einen gewölbten Anzeigeabschnitt (155), die Anzeige (150) umfassend:
eine äußeren Schutzschicht (50), und
eine Panelmodulschicht (40), die unter der äußeren Schutzschicht (50) angeordnet ist;
einen Rahmen (210), auf dem die Anzeige (150) angeordnet ist, der Rahmen umfassend:
einen ersten Rahmenabschnitt (215), umfassend:
eine erste Oberfläche (215_1), die gewölbt ist und einen Abschnitt aufweist, der eine erste Wölbung aufweist, die einer zweiten Wölbung eines Abschnitts des gewölbten Anzeigeabschnitts (155) entspricht,
eine Nut (215e), die entlang einer Kante der ersten Oberfläche (215_1) gebildet ist, wobei die Nut (215e) einen ersten Abschnitt, der innerhalb des Abschnitts der ersten Oberfläche, die die ersten Wölbung aufweist, und einen zweiten Abschnitt, der einer Seite des gewölbten Anzeigeabschnitts (155) zugewandt ist, aufweist, wobei die Nut (215e) als eine Einkerbung des Rahmens (210) in einem Kantenbereich der ersten Oberfläche (215_1) des Rahmens (210) gebildet ist, und
eine zweite Oberfläche (215_2), die an die Nut (215e) anstößt und der Seite des gewölbten Anzeigeabschnitts (155) zugewandt ist; und
einen zweiten Rahmenabschnitt (213), der sich von dem ersten Rahmenabschnitt (215) erstreckt und den flachen Anzeigeabschnitt (153) trägt; und einen Klebstoff (240), der zumindest in dem Abschnitt der Nut (215e) angeordnet ist, die innerhalb der ersten Oberfläche (215_1) gebildet ist, wobei der Klebstoff zwischen dem Rahmen (210) und der Anzeige (150) angeordnet ist und den gewölbten Anzeigeabschnitt (155) an dem Rahmen (210) anbringt.

2. Elektronische Vorrichtung (100) nach Anspruch 1, wobei der Rahmen (210) ferner einen dritten Rahmenabschnitt (211) beinhaltet, der sich von dem zweiten Abschnitt (213) erstreckt und Folgendes beinhaltet:
eine dritte Fläche, die gewölbt ist und einen Abschnitt aufweist, der einem Abschnitt eines anderen gewölbten Anzeigeabschnitts (151) entspricht, und
eine weitere Nut, die entlang der dritten Oberfläche gebildet ist,
wobei der Klebstoff in der anderen Nut zwischen dem Rahmen und der Anzeige angeordnet ist und den anderen gewölbten Anzeigeabschnitt (151) und die dritte Oberfläche des Rahmens (210) anbringt.

3. Elektronische Vorrichtung (100) nach Anspruch 2, wobei die andere Nut in einer Längsrichtung in Bezug auf die dritte Oberfläche des Rahmens (210) gebildet ist.

4. Elektronische Vorrichtung (100) nach Anspruch 1, wobei der Rahmen (210) ferner ein Schutzelement (219) umfasst, das höher als eine Oberfläche der Anzeige (150) angeordnet ist und einen Rand der Anzeige (150) abdeckt.

5. Elektronische Vorrichtung (100) nach Anspruch 1, wobei der Rahmen (210) ferner Folgendes umfasst:
eine Hilfsnut (201), die in mindestens einem Teil einer äußeren Oberfläche des Rahmens (210) gebildet ist; und
ein Verstärkungselement (202), das in der Hilfsnut (201) angeordnet ist, wobei das Verstärkungselement (202) konfiguriert ist, um einen Stoß zu absorbieren oder zu verteilen.

6. Elektronische Vorrichtung (100) nach Anspruch 1, wobei der Rahmen (210) ferner Folgendes umfasst:
ein Tragteil für gewölbte Oberfläche (211), das einem Ende der Anzeige (150) zugewandt ist; und
ein stoßabsorbierendes Element (204), das in einer Seitenfläche des Tragteils für gewölbte Oberfläche (211) angeordnet ist.

7. Elektronische Vorrichtung (100) nach Anspruch 1, wobei der Rahmen (210) ferner ein Batterieplatzierungsteil (280) umfasst, das in Bezug auf eine Mittellinie der elektronischen Vorrichtung (100) vorgespannt ist.

8. Elektronische Vorrichtung (100) nach Anspruch 7, wobei die Nut (215e) in einem angrenzenden Bereich eines Schutzelements (219) angeordnet ist.

9. Elektronische Vorrichtung (100) nach Anspruch 2, wobei eine Breite der ersten Oberfläche (215_1) gleich oder ähnlich wie eine Breite der dritten Oberfläche ist, und
wobei die erste Oberfläche (215_1) und die dritte Oberfläche symmetrisch in Bezug auf eine Fläche sind, die dem zweiten Rahmenabschnitt (213) des Rahmens (210) entspricht.

10. Elektronische Vorrichtung (100) nach Anspruch 1, wobei die Panelmodulschicht (40) zwischen dem Klebstoff und dem Rahmen (210) angeordnet ist, oder wobei der Klebstoff zwischen der Panelmodulschicht (40) und dem Rahmen (210) angeordnet ist.

11. Elektronische Vorrichtung (100) nach Anspruch 1, wobei die erste Oberfläche (215_1) des ersten Rahmenabschnitts (215) um die Nut (215e) gewölbt ist und einer Endkante der Panelmodulschicht (40) und einer oberen Oberfläche der Panelmodulschicht (40) zugewandt ist.

## Revendications

1. Dispositif électronique (100) comprenant :
un affichage (150) comprenant une partie plane d'affichage (153) et une partie courbée d'affichage (155), l'affichage (150) comprenant :
une couche protectrice externe (50), et
une couche de module de panneau (40) disposée sous la couche protectrice externe (50) ;
un cadre (210) sur lequel l'affichage (150) est disposé, le cadre comprenant :
une première partie de cadre (215) comprenant :
une première surface (215_1) qui est courbée et a une partie ayant une première courbure correspondant à une seconde courbure d'une partie de la partie courbée d'affichage (155),
une rainure (215e) formée le long d'un bord de la première surface (215_1), dans lequel la rainure (215e) a une première partie formée à l'intérieur de la partie de la première surface ayant la première courbure et une seconde partie faisant face à un côté de la partie courbée d'affichage (155), dans lequel la rainure (215e) est formée comme une encoche du cadre (210) dans une zone de bord de la première surface (215_1) du cadre (210), et
une deuxième surface (215_2) qui bute contre la rainure (215e) et fait face au côté de la partie courbée d'affichage (155) ; et
une seconde partie de cadre (213) étendue depuis la première partie de cadre (215) et supportant la partie plane d'affichage (153) ; et
un adhésif (240) qui est disposé au moins dans la partie de la rainure (215e) formée à l'intérieur de la première surface (215_1), l'adhésif étant disposé entre le cadre (210) et l'affichage (150) et attachant la partie courbée d'affichage (155) au cadre (210).

2. Dispositif électronique (100) selon la revendication 1, dans lequel le cadre (210) comprend en outre une troisième partie de cadre (211) qui est étendue depuis la deuxième partie (213) et comprend :
une troisième surface qui est courbée et a une partie correspondant à une partie d'une autre partie courbée d'affichage (151), et
une autre rainure formée le long de la troisième surface,
dans lequel l'adhésif est disposé dans l'autre rainure entre le cadre et l'affichage et attache l'autre partie courbée d'affichage (151) et la troisième surface du cadre (210).

3. Dispositif électronique (100) selon la revendication 2, dans lequel l'autre rainure est formée dans une direction longitudinale par rapport à la troisième surface du cadre (210).

4. Dispositif électronique (100) selon la revendication 1, dans lequel le cadre (210) comprend en outre une protection (219) qui est disposée plus haut qu'une surface de l'affichage (150) et recouvre un bord de l'affichage (150).

5. Dispositif électronique (100) selon la revendication 1, dans lequel le cadre (210) comprend en outre :
une rainure auxiliaire (201) formée dans au moins une partie d'une surface externe du cadre (210) ; et
un élément de renfort (202) disposé dans la rainure auxiliaire (201), l'élément de renfort (202) étant configuré pour absorber ou disperser un choc.

6. Dispositif électronique (100) selon la revendication 1, dans lequel le cadre (210) comprend en outre :
une partie de support de surface courbée (211) faisant face à une extrémité de l'affichage (150) ; et
un élément amortisseur (204) disposé dans une surface latérale de la partie de support de surface courbée (211).

7. Dispositif électronique (100) selon la revendication 1, dans lequel le cadre (210) comprend en outre une partie de placement de batterie (280) qui est en biais, par rapport à une ligne centrale du dispositif électronique (100).

8. Dispositif électronique (100) selon la revendication 7, dans lequel la rainure (215e) est disposée dans une zone adjacente d'une protection (219).

9. Dispositif électronique (100) selon la revendication 2, dans lequel une largeur de la première surface (215_1) est identique ou similaire à une largeur de la troisième surface, et
dans lequel la première surface (215_1) et la troisième surface sont symétriques par rapport à une surface correspondant à la deuxième partie de cadre (213) du cadre (210).

10. Dispositif électronique (100) selon la revendication 1, dans lequel la couche de module de panneau (40) est disposée entre l'adhésif et le cadre (210), ou
dans lequel l'adhésif est disposé entre la couche de module de panneau (40) et le cadre (210).

11. Dispositif électronique (100) selon la revendication 1, dans lequel la première surface (215_1) de la première partie de cadre (215) est courbée autour de la rainure (215e) et fait face à un bord d'extrémité de la couche de module de panneau (40) et à une surface supérieure de la couche de module de panneau (40).
